(19) **Europäisches Patentamt**
**European Patent Office**
**Office européen des brevets**

(11) **EP 2 514 099 B1**

(12) **FASCICULE DE BREVET EUROPEEN**

(45) Date de publication et mention
de la délivrance du brevet:
**11.12.2013 Bulletin 2013/50**

(51) Int Cl.:
***H04B 1/00*** (2006.01)

(21) Numéro de dépôt: **10795339.0**

(86) Numéro de dépôt international:
**PCT/EP2010/069989**

(22) Date de dépôt: **16.12.2010**

(87) Numéro de publication internationale:
**WO 2011/073357 (23.06.2011 Gazette 2011/25)**

(54) **DISPOSITIF ET PROCEDE DE RECEPTION DE SIGNAUX RF BASEE SUR UNE ARCHITECTURE HETERODYNE A SOUS-ECHANTILLONNAGE IF COMPLEXE**

VORRICHTUNG UND VERFAHREN FÜR DEN EMPFANG VON HF-SIGNALEN AUF DER BASIS EINER HETERODYNEN ARCHITEKTUR MIT KOMPLEXER IF-SUBABTASTUNG

DEVICE AND METHOD FOR RECEIVING RF SIGNALS BASED ON HETERODYNE ARCHITECTURE USING COMPLEX IF SUB-SAMPLING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.12.2009 FR 0959216**

(43) Date de publication de la demande:
**24.10.2012 Bulletin 2012/43**

(73) Titulaire: **Commissariat à l'Énergie Atomique et aux Énergies Alternatives 75015 Paris (FR)**

(72) Inventeurs:
• **LOLIS, Luis**
**F-38100 Grenoble (FR)**
• **PELISSIER, Michaël**
**F-38000 Grenoble (FR)**

(74) Mandataire: **Ilgart, Jean-Christophe et al BREVALEX 95 rue d'Amsterdam 75378 Paris Cedex 8 (FR)**

(56) Documents cités:
WO-A1-2009/091822        US-A1- 2007 140 382
US-A1- 2009 017 785      US-B2- 7 023 245

• **DABROWSKI J ET AL: "A 2.4-GHz RF Sampling Receiver Front-End in 0.18-<tex>$muhbox m$</tex>CMOS", IEEE JOURNAL OF SOLID-STATE CIRCUITS, IEEE SERVICE CENTER, PISCATAWAY, NJ, US LNKD- DOI:10.1109/JSSC. 2005.848027, vol. 40, no. 6, 1 juin 2005 (2005-06-01), pages 1265-1277, XP011133174, ISSN: 0018-9200 cité dans la demande**
• **YUCE ET AL: "Design and performance of a wideband sub-sampling front-end for multi-standard radios", AEU INTERNATIONAL JOURNAL OF ELECTRONICS AND COMMUNICATIONS, ELSEVIER, JENA, DE LNKD- DOI:10.1016/J.AEUE.2007.02.005, vol. 62, no. 1, 6 décembre 2007 (2007-12-06), pages 41-48, XP022379515, ISSN: 1434-8411**
• **GANG XU ET AL: "Performance analysis of general charge sampling", IEEE TRANSACTIONS ON CIRCUITS AND SYSTEMS II: ANALOG AND DIGITAL SIGNAL PROCESSING IEEE USA, vol. 52, no. 2, février 2005 (2005-02), pages 107-111, XP002588257, ISSN: 1057-7130 cité dans la demande**

EP 2 514 099 B1

**EP 2 514 099 B1**

**Description**

**DOMAINE TECHNIQUE**

L'invention concerne le domaine de la réception de signaux radiofréquence (RF), et plus particulièrement celui des récepteurs RF à architectures échantillonnées.

L'invention concerne notamment un dispositif et un procédé pour réaliser la réception de signaux selon des standards de communication tels que les standards « Bluetooth Low Energy », IEEE 802.15.4 ou « ZigBee », par exemple mis en oeuvre pour des applications dans des réseaux personnels sans fil (WPAN), des réseaux corporels sans fil (WBAN), notamment dans le domaine médical ou encore des réseaux à capteurs et actionneurs (WS&AN), ou toute autre application présentant des canaux dont la bande passante est faible, par exemple inférieure à 4 MHz. L'invention peut notamment être utilisée dans des dispositifs communicants à forte dynamique et présentant une compatibilité entre plusieurs standards (réception multistandards de données).

**ÉTAT DE LA TECHNIQUE ANTÉRIEURE**

Dans les récepteurs RF à architectures échantillonnées, le caractère reconfigurable de ces récepteurs permet de démoduler plus facilement une pluralité de standards de communication. Pour cela, une des techniques capables de transposer le signal dans le domaine du temps discret, puis de le transposer en fréquence consiste à réaliser un sous-échantillonnage du signal.

Le sous-échantillonnage consiste à échantillonner un signal modulé à une fréquence porteuse fc et de faible bande passante BW, telles que BW << fc, à une fréquence d'échantillonnage fs inférieure à celle que respecte le théorème de Shannon. On a donc dans le cas du sous-échantillonnage :

$$fs < 2 \cdot fc$$

Le signal obtenu alors en bande de base correspond un produit de convolution d'un multiple de la fréquence d'échantillonnage fs par le signal lui-même. En définissant une variable n telle que $(n-1).fs/2 < f_L$ et $n.fs/2 > f_H$, avec $f_L$ et $f_H$ telles que $BW_{ch} = f_H - f_L$ ($BW_{ch}$ étant la bande passante d'un canal des signaux RF reçus), la distance entre $(n-1).fs/2$ et fc (qui est égale à $(f_H+f_L)/2$) définit la fréquence en bande de base à laquelle le signal est transposé.

L'utilisation du sous-échantillonnage dans un dispositif de réception RF nécessite toutefois de prendre en compte certaines contraintes. En effet, les normes de communication prévoient généralement des profils d'interféreurs pouvant se placer dans le spectre proche des multiples de la fréquence d'échantillonnage. Par conséquent, après avoir réalisé la transposition en fréquences du signal, les interféreurs peuvent se retrouver en bande de base mélangées au spectre du signal. De plus, le bruit thermique du système étant large bande, celui-ci se replie en bande de base.

Il existe deux catégories d'architectures à sous-échantillonnage : celles réalisant un échantillonnage en charge, également appelé échantillonnage en courant, et celles réalisant un échantillonnage en tension.

Les documents US 7 023 245 B2 et "Performance analysis of general charge sampling" de G. Xu and J. Yuan, IEEE Transactions on Circuits and Systems II : Express Briefs, vol. 52, n°2, pages 107-111, février 2005, décrivent des exemples d'architectures à échantillonnage en charge. Ce type d'échantillonnage consiste à transformer le signal en tension en un signal en courant, à intégrer ce courant pendant une période de temps donnée, puis à bloquer la valeur du signal pour qu'un convertisseur analogique-numérique (CAN) puisse le lire. L'intégration du signal réalisée correspond à une fonction de filtrage réalisant une réjection des interférences (bruit + interféreurs) aux multiples de la fréquence d'échantillonnage, ce qui est une caractéristique intéressante d'un point de vue du filtrage. Toutefois, si le signal utile centré sur fc dépasse l'ordre de grandeur de la fréquence d'échantillonnage fs, la fonction de filtrage réalisée commence alors à rejeter le signal d'intérêt. Une telle architecture nécessite donc de faire appel à une fréquence d'échantillonnage élevée. Or, étant donné que la consommation électrique du circuit récepteur est dépendante de la fréquence la plus haute générée dans le circuit (les éléments générant ces hautes fréquences pouvant représenter près de 40% de la consommation électrique totale du dispositif de réception), une telle architecture ne permet donc pas de baisser significativement la consommation électrique du récepteur. De plus, quand le signal est envoyé en bande de base, le comportement des composants analogiques vis-à-vis des non-linéarités et du bruit forme une source importante de distorsions du signal (par exemple : bruit en 1/f, DC offset, non-linéarités de deuxième ordre).

Les documents US 2007/0140382 A1 et US 2009/0017785 A1 décrivent des architectures à sous-échantillonnage dans lesquelles les voies en phase et en quadrature sont séparées en choisissant un déphasage entre les signaux échantillonneurs de façon à créer un déphasage de N*90° (N impair) à la fréquence centrale fc du signal. Ce type d'architecture implique toutefois de faire appel à une horloge polyphasée. De plus, quand le signal est ramené à une

2

fréquence intermédiaire nulle (« zéro-IF »), des problèmes liés au bruit 1/f et DC offset se posent alors. Enfin, il y a potentiellement des différences de gain et de phase entre les voies. Lorsque le signal est ramené à la fréquence intermédiaire faible (« low-IF »), la réjection image devient d'autant plus limitée que le taux de sous échantillonnage (N=2*fc/fs) augmente.

Dans le cas d'une architecture à échantillonnage en tension telle que décrite dans les documents WO 2009/091822 A1 et "A 2.4-GHz RF sampling receiver front-end in 0.18-µm CMOS" de D. Jakonis et al., IEEE Journal of Solid-State Circuits, vol. 40, n°6, pages 1265-1277, Juin 2005, il n'y a pas d'étape d'intégration du signal, ce qui autorise en théorie d'utiliser une fréquence d'échantillonnage plus faible que celle utilisée dans une architecture à échantillonnage de charge. Toutefois, le filtrage image est géré par un dispositif externe à l'échantillonneur, formé par exemple par un filtre RF et un LNA (amplificateur faible bruit) disposés en amont de l'échantillonneur et fonctionnant aux fréquences RF, c'est-à-dire aux fréquences des signaux RF reçus. Or, un tel filtre présente une faible sélectivité, ce qui implique de faire appel à un second filtre fonctionnant à une fréquence intermédiaire IF supérieure à deux fois la bande passante RF, cette fréquence étant d'autant plus élevée que la bande passante RF du signal est importante afin d'éviter tout repliement lors de l'échantillonnage. Etant donné que, dans cette architecture, la fréquence d'échantillonnage est définie par la relation fs = 4.IF afin de réaliser une séparation des voies en phase et en quadrature du signal en IF et réaliser un filtrage image, on retrouve donc une fréquence d'échantillonnage là encore relativement élevée n'autorisant pas une baisse significative de la consommation électrique du récepteur. De plus, pour atteindre la réjection requise, une telle architecture doit faire appel à un réseau de filtrage en temps discret comportant un ordre de filtrage important (24 dans ce document), ce qui engendre des contraintes en surface et en consommation électrique sur ce type d'architecture de réception.

Le document "Design and performance of a wideband sub-sampling front-end for multi-standard radios" de M. Yuce, A. Tekin and W. Liu, AEU International Journal of Electronics and Communications, Elsevier, Jena, vol. 62, no. 1, 6 décembre 2007, pages 41-48, divulgue l'utilisation d'une étape analogique de transposition RF->IF avant la sous-échantillonnage pour combattre la gigue causant du bruit de phase et pour combattre le bruit de quantification.

On voit donc que les dispositifs de réception RF de l'art antérieur réalisant un sous-échantillonnage du signal posent plusieurs problèmes :

- les fréquences de référence utilisées (fréquence de l'échantillonneur, fréquence intermédiaire) sont au moins égales à la fréquence $f_{RF}$/2 pour les architectures à échantillonnage en tension, et au moins égales à la fréquence $f_{RF}$ pour les architectures à échantillonnage en charge, ce qui ne permet pas de réduire significativement la consommation électrique totale du récepteur,
- pour les architectures réalisant une transposition du signal directement en bande de base, le comportement des composants analogiques vis-à-vis des non-linéarités et du bruit est une source importante de distorsions du signal,
- faire appel à des réseaux de filtrage en temps discrets avec un ordre de filtrage important demande beaucoup de surface pour la réalisation de tels réseaux et représente également une source de consommation électrique importante.

## EXPOSÉ DE L'INVENTION

Un but de la présente invention est de proposer un dispositif de réception de signaux RF ne présentant pas les inconvénients de l'art antérieur précédemment cités.

Pour cela, la présente invention propose un dispositif de réception de signaux RF comportant au moins :

- des moyens de transposition de signaux de fréquence $f_{RF}$ à une première fréquence intermédiaire IF1 < $f_{RF}$,
- des premiers moyens de filtrage passe-bande centré sur IF1 de signaux transposés à IF1,
- des moyens d'échantillonnage à une fréquence fs < IF1 de signaux délivrés par les premiers moyens de filtrage, assurant une transposition desdits signaux délivrés par les premiers moyens de filtrage à une seconde fréquence intermédiaire IF2 = $\alpha$.fs/M + fs/(M.n),
- des seconds moyens de filtrage en temps discret centré sur la seconde fréquence intermédiaire IF2 d'échantillons délivrés par les moyens d'échantillonnage,
- des moyens de décimation d'un facteur M d'échantillons délivrés par les seconds moyens de filtrage, assurant une transposition des échantillons délivrés par les seconds moyens de filtrage à une troisième fréquence intermédiaire IF3 = fs/(M.n),
- des moyens de conversion analogique-numérique fonctionnant à une fréquence fs/M d'échantillons délivrés par les moyens de décimation,

$\alpha$, n et M étant des nombres réels strictement positifs choisis tels que :

$$\alpha \ < \ fs/(2.BW_{ch}.M),$$

et

$$BW_{ch}/2 \ < \ fs/(M.n),$$

avec $BW_{ch}$ : bande passante d'un canal des signaux RF reçus.

L'invention propose donc un dispositif de réception RF comportant une architecture à échantillonnage en tension ne nécessitant pas la génération de signaux de fréquences importantes, permettant ainsi au dispositif de réception selon l'invention de présenter une faible consommation électrique (permettant par exemple d'obtenir un gain d'environ 30% par rapport aux dispositifs de l'art antérieur).

Le dispositif de réception s'appuie sur une triple transposition de fréquence à trois fréquences intermédiaires IF1, IF2 et IF3, avec IF1 > IF2 > IF3, avant que le signal utile ne soit converti en bande de base numérique.

Le dispositif de réception selon l'invention sera particulièrement avantageux du point de vue de la consommation électrique de la synthèse de fréquence lorsque la première fréquence intermédiaire IF1 sera choisie relativement haute, par exemple supérieure à environ 2 GHz.

Les moyens d'échantillonnage à la fréquence fs des signaux délivrés par les premiers moyens de filtrage permettent d'assurer la transposition dù signal à la deuxième fréquence intermédiaire IF2.

Les moyens de décimation d'un facteur M des échantillons délivrés par les seconds moyens de filtrage permettent d'assurer la transposition du signal à la troisième fréquence intermédiaire IF3 = fs/(M.n), qui est de l'ordre de grandeur de $BW_{ch}$ (par exemple inférieure à 6 MHz), ce qui relâche les contraintes sur la conception du dispositif liées aux problèmes de DC offset, de bruit en 1/f et de produits d'intermodulation de deuxième ordre. De plus, l'invention peut présenter un taux de sous-échantillonnage supérieur à 30.

De plus, étant donné que le dispositif de réception ne réalise pas une transposition du signal RF directement en bande de base, le dispositif selon l'invention ne nécessite pas, pour sa réalisation, des capacités de valeurs très importantes qui demandent une grande surface de silicium pour leur réalisation. Le dispositif selon l'invention ne comporte pas non plus de réseaux de filtrage en temps discrets avec un ordre de filtrage important qui demandent également une surface de silicium importante pour leur réalisation.

En effectuant une première transposition de fréquence du signal RF à la fréquence IF1, on réduit la bande utile du signal à échantillonner de $BW_{RF}$, correspondant à la bande passante totale du signal RF, à $BW_{ch}$, correspondant à la bande passante du canal d'intérêt du signal reçu, autorisant une transposition du signal à une fréquence IF2 notablement plus faible que dans les récepteurs de l'art antérieur, et cela sans engendrer pour autant de repliement spectral.

En réalisant un filtrage passe-bande complexe centré à la fréquence IF2 = $\alpha$.fs/M + fs/(M.n), on utilise de façon optimale la fonction de filtrage en temps discret du dispositif de réception car un tel filtrage permet d'atteindre les réjections en filtrage image et anti-repliement nécessaires avec un filtre d'ordre plus faible que celui nécessaire dans les architectures de l'art antérieur. Par conséquent, lorsque ces seconds moyens de filtrage sont réalisés à partir de capacités commutées, un tel filtre pourra être réalisé à partir d'un nombre de capacités commutées plus faible que pour les filtres intermédiaires des architectures de l'art antérieur, engendrant ainsi moins de pertes sur les signaux filtrés et présentant une sensibilité moindre par rapport aux variations technologiques liées à la réalisation des éléments du dispositif récepteur.

Compte tenu du traitement du signal en temps discret réalisé par les seconds moyens de filtrage et de l'architecture à sous-échantillonnage de l'invention, le dispositif selon l'invention va également dans le sens de l'évolution des circuits intégrés, qui est de réaliser le plus de fonctions de traitement en temps discret et non en temps continu.

De plus, contrairement aux architectures de l'art antérieur, la séparation des voies peut se faire à travers le choix des coefficients du filtre.

Les seconds moyens de filtrage peuvent comporter au moins un filtre à réponse impulsionnelle infinie (RII). Un tel filtre RII présente une réponse beaucoup plus sélective que celle présentée par un filtre à réponse impulsionnelle finie (RIF) du même ordre centré sur une même fréquence. Un tel filtre permet notamment que les contraintes sur les moyens de conversion analogique-numérique soient sensiblement relâchées. Ce filtre peut être réalisé par exemple à partir de quatre capacités commutées. Ce filtre permet non seulement de supprimer les fréquences images et les repliements, mais également de réaliser un filtrage canal du signal utile pour supprimer les canaux adjacents.

Les moyens de transposition des signaux de fréquence $f_{RF}$ à la première fréquence intermédiaire IF1 peuvent comporter un mélangeur apte à réaliser une convolution fréquentielle entre les signaux de fréquence $f_{RF}$, comprise entre une valeur maximale $f_{RFmax}$ et une valeur minimale $f_{RFmin}$, et un signal destiné à être délivré par un oscillateur local et de fréquence $f_{OL}$ comprise entre $f_{RF}min$ - IF1 et $f_{RF}max$ - IF1, telle que :

$$IF1 = N.fs + IF2 = N.fs + \alpha.fs/M + fs/(M.n), \text{ et}$$

$$IF1 = f_{RF} - f_{OL}, \text{ avec } f_{OL} = K.fs,$$

K étant un rapport choisi entre $f_{OL}$ et fs, et N étant l'ordre de l'harmonique transposant le signal de la fréquence IF1 à la fréquence IF2.

Ainsi, on voit que les fréquences IF1 et IF2 des différents filtrages réalisés, ainsi que la fréquence d'échantillonnage fs et la fréquence à laquelle la conversion analogique-numérique est réalisée, à savoir IF3 = fs/(M.n), sont interdépendantes.

La fréquence fs et les paramètres N, $\alpha$, M, n et K peuvent être choisis tels que la première fréquence intermédiaire IF1 soit compatible avec l'implémentation d'un filtre à fréquence intermédiaire IF1 ayant une bande passante adéquate, c'est-à-dire au moins égale à $BW_{ch}$, entre IF1c - $BW_{IF\_filtre}/2$ et IF1c + $BW_{IF\_filtre}/2$, $BW_{IF\_filtre}$ étant la bande passante du filtrage analogique réalisé à IF1 et IF1c étant la fréquence centrale de la gamme de variation de IF1 notée $\Delta$IF1. En considérant la fréquence d'un oscillateur local telle que $f_{OL} = f_{RF}$ - IF1, utilisé pour réaliser le déplacement fréquentiel de $f_{RF}$ à IF1, un facteur K reliant cette fréquence de l'oscillateur local à la fréquence d'échantillonnage tel que $f_{OL} = K.fs$ peut être défini. Le pas de variation $\Delta$K de ce facteur K pourra dépendre notamment de la variation autorisée pour la valeur d'IF1. Par exemple, pour $\Delta$IF1 = 15MHz, le pas de K pourra alors être $\Delta$K = 0,5.

La fréquence fs et les paramètres N, $\alpha$, M, n et K peuvent être choisis tels que la variation de la première fréquence intermédiaire IF1 s'adapte aux possibilités de la technologie du filtre à IF1. Ainsi, la fréquence fs et les paramètres $\alpha$, n, M, N et K peuvent être choisis tels que :

$$BW_{IF1} \geq \Delta IF1 + BW_{ch}/2$$

avec $BW_{IF1}$ : bande passante des premiers moyens de filtrage, et
$\Delta$IF1 : variation de IF1 lorsque $f_{RF}$ varie entre $f_{RFmax}$ et $f_{RFmin}$.

Lorsque $f_{OL}$ et fs ne sont par exemple pas liées par le facteur K, la fréquence fs et les paramètres $\alpha$, n et M peuvent être choisis tels que :

$$BW_{IF1} \geq 2BW_{ch}$$

avec $BW_{IF1}$ : bande passante des premiers moyens de filtrage.

Le rapport K peut être choisi de telle manière que l'on ait une synthèse de fréquence numérique de type DDS (« Direct Digital Synthesis » en anglais) ou PLL (« Phase Locked Loop » en anglais) fractionnaire unique qui gère l'oscillateur local ($f_{OL}$) et l'échantillonnage (fs).

Le dispositif peut comporter en outre au moins une antenne de réception reliée à une entrée de moyens de filtrage passe-bande centré sur la fréquence $f_{RF}$ dont une sortie est reliée à une entrée d'un amplificateur faible bruit, la sortie de l'amplificateur faible bruit étant reliée à une entrée des moyens de transposition des signaux de fréquence $f_{RF}$ à la première fréquence intermédiaire IF1. Ces éléments supplémentaires complètent ainsi le dispositif de réception en formant un premier étage de traitement des signaux RF reçus.

La bande passante des moyens de filtrage passe-bande centré sur la fréquence $f_{RF}$ peut être égale ou supérieure à la largeur de bande totale des canaux des signaux RF destinés à être reçus par l'antenne et/ou les moyens de filtrage passe-bande centré sur la fréquence $f_{RF}$ peuvent comporter au moins un filtre passif, par exemple de type BAW/FBAR (c'est-à-dire comportant un résonateur à ondes de volume).

Les premiers moyens de filtrage passe-bande centré sur IF1 peuvent comporter au moins un filtre de type BAW, par exemple de type BAW/FBAR ou BAW à ondes de Lamb, et/ou lorsque les moyens de transposition des signaux de fréquence $f_{RF}$ à la première fréquence intermédiaire IF1 comportent un oscillateur local, ledit oscillateur local peut comporter un résonateur de type BAW. Ainsi, il est possible d'utiliser la même technologie piézoélectrique pour réaliser le filtre large bande RF et/ou le filtre bande étroite de canal en IF1 et/ou le résonateur de l'oscillateur local utilisé pour générer la fréquence de référence $f_{OL}$ dans la chaîne de réception. L'intégration de ces trois composants peut être dans ce cas réalisée à partir d'une même couche piézoélectrique, par exemple à base d'AlN, ces éléments pouvant comporter chacun une épaisseur sensiblement similaire et pouvant être réalisés à partir de la mise en oeuvre d'étapes de lithographie communes.

Le dispositif peut comporter en outre des moyens de répartition sélective des composantes en phase et en quadrature des échantillons délivrés par les moyens d'échantillonnage sur des voies distinctes, et dans lequel les seconds moyens de filtrage en temps discret, les moyens de décimation et les moyens de conversion analogique-numérique peuvent être présents sur chacune des voies. La combinaison de ces voies peut représenter la fonction de filtrage en temps discret complexe proposée.

Le dispositif peut comporter en outre des moyens de conversion en bande de base numérique et de combinaison des voies en phase et en quadrature des échantillons numériques délivrés par les moyens de conversion analogique-numérique. Ainsi, ces moyens de conversion en base de base numérique permettent donc de réaliser une séparation des voies en phase et en quadrature de façon simple pour les signaux numériques (par exemple à partir de quatre mélangeurs numériques et de deux additionneurs). Le reste de la démodulation numérique peut être assuré par les éléments numériques se trouvant en aval de ces moyens de conversion et de combinaison.

L'invention concerne également un procédé de réception de signaux RF comportant au moins les étapes de :

a) transposition de signaux de fréquence $f_{RF}$ à une première fréquence intermédiaire IF1 < $f_{RF}$,

b) filtrage passe-bande centré sur IF1 de signaux transposés à l'étape a),

c) échantillonnage à une fréquence fs < IF1 de signaux filtrés à l'étape b), assurant une transposition desdits signaux filtrés à l'étape b) à une seconde fréquence intermédiaire IF12 = $\alpha$.fs/M + fs/(M.n),

d) filtrage en temps discret centré sur la seconde fréquence intermédiaire IF2 d'échantillons obtenus à l'étape c),

e) décimation d'un facteur M d'échantillons filtrés à l'étape d), assurant une transposition des échantillons filtrés à l'étape d) à une troisième fréquence intermédiaire IF3 = fs/(M.n),

f) conversion analogique-numérique à une fréquence fs/M d'échantillons décimés à l'étape e),

$\alpha$, n et M étant des nombres réels strictement positifs choisis tels que :

$$\alpha \; < \; fs/(2.BW_{ch}.M),$$

et

$$BW_{ch}/2 \; < \; fs/(M.n),$$

avec $BW_{ch}$ : bande passante d'un canal des signaux RF reçus.

Un tel procédé peut notamment être mis en oeuvre par le dispositif de réception précédemment décrit.

L'étape c) d'échantillonnage à la fréquence fs réalise la transposition du signal à la seconde fréquence inter-médiaire IF2 = $\alpha$.fs/M + IF3 = $\alpha$.fs/M + fs/(M.n). De plus, l'étape e) de décimation assure la transposition du signal à la troisième fréquence intermédiaire IF3.

Le filtrage à temps discret peut être réalisé par une fonction à réponse impulsionnelle infinie.

L'étape a) de transposition des signaux de fréquence $f_{RF}$ à la première fréquence intermédiaire IF1 peut comporter la réalisation d'une convolution fréquentielle entre les signaux de fréquence $f_{RF}$ comprise entre une valeur maximale $f_{RFmax}$ et une valeur minimale $f_{RFmin}$, et un signal de fréquence $f_{OL}$ comprise entre $f_{RF}min$ - IF1 et $f_{RF}max$ - IF1, telle que :

$$IF1 \; = \; N.fs \; + \; \alpha.fs/M \; + \; fs/(M.n),$$

et

$$IF1 \; = \; F_{RF} \; - \; f_{OL}, \; et \; f_{OL} \; = \; K.fs,$$

K étant un rapport choisi entre $f_{OL}$ et fs, et N étant l'ordre de l'harmonique transposant le signal de la fréquence IF1 à la fréquence IF2.

Le procédé peut comporter en outre, avant la mise en oeuvre de l'étape a) de transposition, une étape de filtrage passe-bande centré sur la fréquence $f_{RF}$ puis une étape d'amplification faible bruit des signaux filtrés.

La bande passante du filtrage passe-bande centré sur la fréquence $f_{RF}$ peut être égale ou supérieure à la largeur de bande totale des canaux des signaux RF reçus.

Le procédé peut comporter en outre, entre les étapes c) et d), la mise en oeuvre d'une étape de répartition sélective des composantes en phase et en quadrature des échantillons obtenus à l'étape c) sur au moins deux voies, les étapes d) à f) pouvant être ensuite appliquées aux composantes réparties sur chacune des voies.

**BRÈVE DESCRIPTION DES DESSINS**

La présente invention sera mieux comprise à la lecture de la description d'exemples de réalisation donnés à titre purement indicatif et nullement limitatif en faisant référence aux dessins annexés sur lesquels :

- la figure 1 représente un dispositif de réception RF, objet de la présente invention, selon un mode de réalisation particulier,
- la figure 2 représente les variations d'IF1 en fonction de $f_{RF}$, K et N dans un dispositif de réception RF, objet de la présente invention, selon un premier exemple de réalisation,
- la figure 3 représente les variations de $f_{adc}$ en fonction de $f_{RF}$, K et N dans le dispositif de réception RF, objet de la présente invention, selon le premier exemple de réalisation,
- la figure 4 représente des fonctions de filtrage passe-bande obtenues par des filtres RII dont l'un fait partie du dispositif de réception RF, objet de la présente invention, selon le premier exemple de réalisation,
- la figure 5 représente les variations d'IF1 en fonction de $f_{RF}$ et K dans un dispositif de réception RF, objet de la présente invention, selon un second exemple de réalisation,
- la figure 6 représente les variations de $f_{adc}$ en fonction de $f_{RF}$ et K dans le dispositif de réception RF, objet de la présente invention, selon le second exemple de réalisation,
- la figure 7 représente une fonction de filtrage passe-bande réalisée par un filtre RII faisant partie du dispositif de réception RF, objet de la présente invention, selon le second exemple de réalisation,
- les figures 8A et 8B représentent des exemples de réalisation de filtres en temps discrets et de décimateurs d'un dispositif de réception RF, objet de la présente invention, selon le premier exemple de réalisation,
- la figure 9 représente des chronogrammes de signaux de commande envoyés aux commutateurs représentés sur la figure 8A pour réaliser les fonctions de filtrage et de décimation.

Des parties identiques, similaires ou équivalentes des différentes figures décrites ci-après portent les mêmes références numériques de façon à faciliter le passage d'une figure à l'autre.
Les différentes parties représentées sur les figures ne le sont pas nécessairement selon une échelle uniforme, pour rendre les figures plus lisibles.
Les différentes possibilités (variantes et modes de réalisation) doivent être comprises comme n'étant pas exclusives les unes des autres et peuvent se combiner entre elles.

**EXPOSÉ DÉTAILLÉ DE MODES DE RÉALISATION PARTICULIERS**

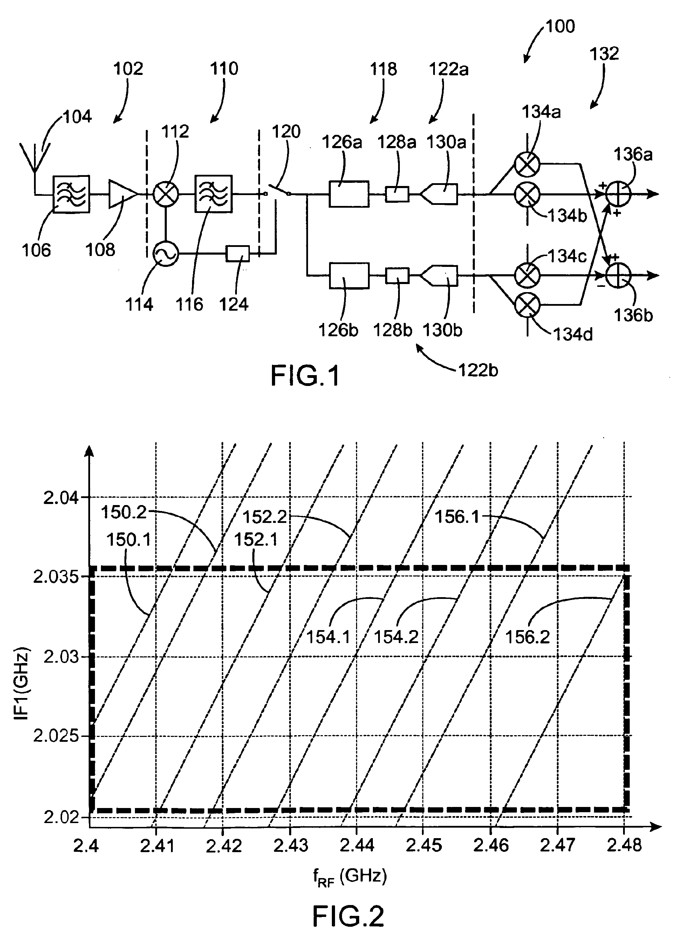

On se réfère tout d'abord à la figure 1 qui représente de manière schématique un dispositif de réception RF 100 selon un mode de réalisation particulier.
Le dispositif de réception 100 comporte un premier étage RF 102 comportant une antenne 104 destinée à capter des signaux RF.
Le premier étage 102 comporte également un premier filtre passe-bande 106 dans lequel les signaux RF reçus par l'antenne 104 sont ensuite envoyés. Le premier filtre passe-bande 106 présente une bande passante par exemple au moins égale à la largeur de bande totale des canaux des signaux RF reçus. Par exemple, pour des signaux conformes aux spécifications des normes Bluetooth Low Energy et IEEE 802.15.4, $f_{RF}$ varie entre 2,4 GHz et 2,48 GHz. Le premier filtre passe-bande 106 peut donc avoir une bande passante égale à environ 100 MHz centrée à 2,44 GHz, et réaliser une réjection de -35 dB des signaux se trouvant en dehors de cette bande. La valeur de la réjection hors-bande réalisée par ce premier filtre passe-bande 106 dépendra notamment de la dégradation maximale tolérée du rapport signal sur bruit, ainsi que de la technologie dans laquelle est réalisé le filtre passe-bande 106. Ce premier filtre passe-bande 106 permet d'éliminer du signal RF reçu les signaux bloqueurs hors-bande. Ce filtre passe-bande 106 est par exemple de type BAW (filtre à ondes acoustiques de volume).
Enfin, le premier étage 102 comporte un amplificateur faible bruit 108 (LNA) dont l'entrée est reliée à la sortie du premier filtre passe-bande 106, permettant ainsi d'amplifier le signal filtré par le premier filtre passe-bande 106.
Le dispositif de réception 100 comporte un second étage 110 fonctionnant à une première fréquence intermédiaire IF1 < $f_{RF}$. Ce second étage 110 comporte un mélangeur 112 servant de multiplicateur de fréquences, réalisant une convolution fréquentielle et la transposition du signal obtenu en sortie du LNA 108 à la fréquence IF1. Pour cela, le mélangeur 112 reçoit en entrée le signal de sortie du LNA 108 ainsi qu'un signal délivré par un oscillateur local 114 délivrant un signal périodique dont la fréquence $f_{OL}$ est comprise entre $f_{RF}$min - IF1 et $f_{RF}$max - IF1. On obtient donc en sortie du mélangeur 112 un signal transposé à la fréquence IF1. Il convient de noter que le premier filtre passe-bande 106 permet également de filtrer les fréquences images se trouvant à $f_{RF}$ - 2.IF1.

Le second étage 110 comporte également un deuxième filtre passe-bande 116 destiné à filtrer le bruit large bande, permettant de réaliser une fonction de filtrage d'anti-repliement. Ce deuxième filtre passe-bande 116 est centré sur IF1 et présente une bande passante par exemple égale à 20 MHz. La valeur de la bande passante de ce deuxième filtre 116 sera choisie en fonction de plusieurs autres paramètres détaillés plus loin. Le filtrage analogique réalisé par le deuxième filtre passe-bande 116 à la fréquence intermédiaire IF1 permet de réaliser ensuite un échantillonnage en tension du signal filtré présentant un fort taux de sous-échantillonnage, l'échantillonnage pouvant donc être réalisé à de faibles fréquences. Là encore, la valeur de la réjection hors-bande réalisée par ce deuxième filtre passe-bande 116, par exemple égale à -35 dB, dépendra notamment de la tolérance concernant la dégradation maximale du rapport signal sur bruit, ainsi que de la technologie dans laquelle est réalisé ce deuxième filtre passe-bande 116.

En réalisant l'oscillateur local 114 et le second filtre passe-bande 116 en technologie BAW, ces deux éléments peuvent donc utiliser le même type de résonateur, ce qui permet à l'architecture de compenser toute variation technologique et/ou variation en température. De plus, en réalisant l'oscillateur local 114 en technologie BAW, cet oscillateur dispose d'un coefficient de qualité élevé permettant d'atteindre les mêmes performances en termes de bruit de phase qu'un oscillateur à quartz. Il sera dans ce cas également judicieux de réaliser le premier filtre passe-bande 106 en technologie BAW afin de réaliser ces éléments 106, 114 et 116 à partir d'étapes communes de lithographie.

Le dispositif de réception 100 comporte un troisième étage 118 servant d'échantillonneur-bloqueur et de convertisseur analogique-numérique du signal, formant un réseau à sous-échantillonnage complexe. Ce troisième étage 118 comporte des moyens d'échantillonnage 120 du signal à une fréquence fs, transposant le signal issu du deuxième filtre passe-bande 116 à une seconde fréquence intermédiaire IF2 < IF1. Le dispositif de réception 100 comporte également un diviseur de fréquence 124 d'un facteur K paramétrable relié entre les moyens d'échantillonnage 120 et l'oscillateur local 114, divisant la fréquence de l'oscillateur local 114 pour obtenir la fréquence d'échantillonnage. Ainsi, il est possible d'avoir un seul circuit de synthèse de fréquence permettant de générer les commandes du mélangeur et de l'échantillonneur.

Le signal échantillonné est ensuite envoyé sur deux voies 122a, 122b comportant chacune un filtre 126a et 126b, respectivement à coefficients aI et aQ, permettant de séparer les composantes en phase et en quadrature du signal échantillonné sur les deux voies et de les filtrer en temps discret, réalisant un filtrage actif (aI et aQ > 1) ou passif (aI et aQ < 1) à la fréquence IF2, permettant de réaliser un filtrage efficace du canal image ainsi que des bandes de repliement. En effet, en optimisant la fréquence centrale IF2 des filtres en temps discret 126a, 126b, il est possible de réduire l'ordre de filtrage nécessaire pour réaliser les réjections des fréquences images. Les filtres 126a, 126b sont de préférence des filtres de type RII (filtres à réponses impulsionnelles infinies), qui sont beaucoup plus sélectifs que des filtres RIF (filtres à réponses impulsionnelles finies) pour un même nombre de coefficients du filtre.

Le signal filtré est ensuite décimé sur chacune des voies 122a, 122b par un décimateur 128a, 128b réduisant le taux d'échantillonnage d'un facteur M et transposant ainsi le signal à une fréquence IF3 < IF2. Une conversion analogique-numérique à une fréquence $f_{adc}$ du signal est réalisée par des convertisseurs analogique-numérique 130a, 130b.

Le dispositif 100 comporte enfin un étage de conversion en bande de base numérique 132 comportant quatre mélangeurs 134a, 134b, 134c et 134d, et deux additionneurs 136a, 136b permettant, à partir des signaux issus des mélangeurs 134a à 134d, d'obtenir les signaux démodulés en phase (I(t)) et en quadrature (Q(t)). Deux des mélangeurs 134a, 134b comportent une de leurs entrées reliée à la sortie du convertisseur 130a, les deux autres mélangeurs 134c, 134d comportant une de leurs entrées reliée à la sortie du convertisseur 130b. De plus, les mélangeurs 134a et 134d reçoivent sur leur seconde entrée les coefficients numériques correspondant à un signal de type sinus (0, 1, 0, -1, ...), tandis que les mélangeurs 134b et 134c reçoivent sur leur seconde entrée les coefficients numériques correspondant à un signal de type cosinus (1, 0, -1, 0, ...). L'additionneur 136a réalise la somme des signaux obtenus en sortie des mélangeurs 134b et 134d, et l'additionneur 136b réalise la soustraction du signal obtenu en sortie du mélangeur 134c au signal obtenu en sortie du mélangeur 134a.

Les signaux, par exemple des interféreurs ne se trouvant pas dans le canal d'intérêt, présents dans les signaux démodulés en phase et en quadrature, peuvent être filtrés par des éléments de filtrage numériques se trouvant en aval des additionneurs 136a, 136b.

On décrit maintenant comment est défini le plan fréquentiel du récepteur 100, c'est-à-dire comment sont choisies les fréquences de travail des différents éléments du récepteur 100 ainsi que les fréquences des signaux que l'on souhaite obtenir dans les différents étages du récepteur 100.

L'élément de départ est la fréquence des convertisseurs analogique-numérique $f_{adc}$ qui est imposée en fonction du signal numérique que l'on souhaite obtenir en sortie du récepteur 100 ainsi que d'autres contraintes telles que la consommation maximale autorisée. Dans le but de pouvoir optimiser la multiplication en fréquences réalisée par les mélangeurs 134a à 134d, on définit IF3 telle qu'elle soit un sous-multiple entier de $f_{adc}$:

$$IF3 = f_{adc}/n \tag{1}$$

n étant un nombre réel choisi par exemple dans une gamme comprise entre $4 < n < 2.f_{adc}/BW_{ch}$.

La distance entre IF2 et $f_{adc}$ définit également IF3 telle que :

$$IF3 = IF2 - \alpha.f_{adc} \tag{2}$$

soit:

$$IF2 = \alpha.f_{adc} + f_{adc}/n \tag{3}$$

En raison des filtres en temps discret 126a, 126b utilisés et de la décimation réalisée, $f_{adc}$ est également un sous multiple entier M de fs :

$$f_{adc} = fs/M \tag{4}$$

On a donc :

$$IF2 = \alpha.fs/M + fs/(M.n) \tag{5}$$

Entre IF1 et fs, il existe un fort taux de sous-échantillonnage. C'est une harmonique d'ordre N qui vient transposer le signal d'IF1 à IF2 tel que :

$$IF2 = IF1 - N.fs \tag{6}$$

A partir de l'équation (6), on déduit alors :

$$IF1 = N.fs + \alpha.fs/M + fs/(M.n) \tag{7}$$

Si fs est une fréquence fixée par rapport à la fréquence IF1, la fréquence de l'oscillateur local $f_{OL}$ est indépendante de fs et varie alors selon le canal choisi à démoduler :

$$f_{OL} = f_{RF} - IF1 \tag{8}$$

On voit donc qu'un choix d'une fréquence IF1 importante permet de réduire la fréquence $f_{OL}$ qui devra être générée.

On choisit alors la valeur d'IF1. Afin d'éviter que la synthèse de fréquences soit très complexe, qui engendrerait une conception complexe des éléments du dispositif de réception 100, ou qu'il existe un besoin de deux circuits de synthèse indépendants, un rapport fractionnaire K limité (par exemple K = 3,5 ; 4,5 ; 4) peut relier la fréquence de l'oscillateur local $f_{OL}$ et fs tel que :

$$f_{OL} = K.fs \tag{9}$$

En considérant que fs et IF1 sont variables, on peut choisir les valeurs de n, M, N et K afin d'obtenir le minimum de variations de $f_{adc}$ et IF1 pour la démodulation de chaque canal en $f_{RF}$, tout en respectant les contraintes en filtrage requises par le standard de réception RF.

La variation d'IF1 ($\Delta$IF1) et sa valeur centrale IF1c sont données par les équations suivantes :

$$\Delta IF1 = f_{RFmax}((N_2+C)/(K_2+N_2+C) - (N_1+C)/(K_1+N_1+C)) \qquad (10)$$

$$IF1c = f_{RFmax}(N_2+C)/(K_1+N_1+C) - \Delta IF1/2 \qquad (11)$$

avec :

$$K_2 = K_1 + \Delta K \qquad (12)$$

$$N_2 = |(N_1.K_2)/K_1| \qquad (13)$$

$$C = \alpha/M + 1/(M.n) \qquad (14)$$

$K_1$, $K_2$, $N_1$ et $N_2$ sont des valeurs particulières des paramètres K et N pour lesquelles, pour une valeur IF1 donnée, les couples successifs $(K_1, N_1)$ et $(K_2, N_2)$ correspondent aux valeurs de $f_{RF}$ les plus éloignées l'une de l'autre, en considérant tous les couples (Kx, Nx) d'une fenêtre de valeurs de $f_{RF}$ donnée. La détermination des valeurs de $K_1$, $K_2$, $N_1$ et $N_2$ sera détaillée plus loin en liaison avec la figure 2.

L'équation qui lie $f_{RF}$ et fs devient alors :

$$fs = f_{RF}\left(\frac{M \cdot n}{K \cdot M \cdot n + N \cdot M \cdot n + \alpha \cdot n + 1}\right) \qquad (15)$$

avec :

M : ordre de décimation des décimateurs 128a, 128b,
K : Rapport entre $f_{OL}$ et fs,
N : numéro d'harmonique à réaliser la transposition fréquentielle d'IF1 à IF2,
n : Rapport entre IF3 et $f_{adc}$,
$\alpha$ : numéro d'harmonique entre $f_{adc}$ et IF2

Le caractère reconfigurable du dispositif de réception 100 est illustré notamment par le fait qu'il est possible d'utiliser aussi bien une haute fréquence intermédiaire IF1 qu'une basse fréquence intermédiaire IF1.

On donne ci-dessous un premier exemple de réalisation dans le cas d'une haute fréquence intermédiaire IF1.

On déduit des équations présentées ci-dessus que pour simplifier la synthèse de fréquences, on considère les fréquences $f_{OL}$, fs et $f_{adc}$ liées par des rapports entiers ou multiples de 0,5 ($\Delta K = 0,5$). Pour démontrer les équations ci-dessus, on considère que le dispositif de réception 100 est conforme aux spécifications des normes Bluetooth Low Energy et IEEE 802.15.4. La fréquence $f_{RF}$ varie de 2,4 GHz à 2,48 GHz avec un pas fréquentiel de 1 MHz entre chaque canal. Dans ce premier exemple, on souhaite avoir la valeur d'IF1 située autour de 2 GHz, ce choix étant en phase avec les développements des filtres BAW à ondes de Lamb envisagés dans cette architecture. De manière générale, lorsque l'on choisira une haute fréquence intermédiaire IF1, la valeur d'IF1 pourra être inférieure ou égale à environ 2,1 GHz.

Etant donné que l'on souhaite réduire la consommation du dispositif 100, et que la fréquence de fonctionnement des convertisseurs analogique-numérique est par exemple choisie supérieure à environ quatre fois la bande passante d'un canal du standard des signaux reçus, un choix de $f_{adc}$ égale à environ 25 MHz permet de réaliser les convertisseurs 130a, 130b selon des architectures présentant une faible consommation. Concernant le rapport entre IF3 et $f_{adc}$, on choisit par exemple n = 4, n étant un entier pouvant être compris entre 4 et $2.f_{adc}/BW_{ch}$. En choisissant n = 4, la bande passante du canal à démoduler $BW_{ch}$ peut ainsi être maximisée par rapport à la bande de Nyquist $f_{adc}/2$. Les équations (8), (9) et (15) montrent que si les paramètres M, N, K et $\Delta$ ne varient pas, fs et IF1 vont varier d'environ 80 MHz (80 MHZ = 2,48 GHz - 2,4 GHz). Or, M, qui est l'ordre de décimation du filtre en temps discret, est un paramètre lié à la fonction de filtrage en temps discret qui dépend de la structure du circuit qui réalise cette fonction. On peut par exemple choisir de réaliser un réseau de filtrage de 4$^{ème}$ ordre, c'est-à-dire choisir M = 4, étant donné qu'un tel filtre est le plus simple capable de respecter les spécifications des standards choisis. En choisissant M = 4 et $\alpha$ = 1, on définit alors fs comme égale à environ 100 MHz.

En considérant la valeur de IF1 égale à environ 2 GHz et celle de $f_{RF}$ comprise entre 2,4 GHz et 2,48 GHz, il peut être déduit de l'équation (8) que $f_{OL}$ est comprise entre environ 400 MHz et 480 MHz. De plus, le rapport entre $f_{OL}$ et fs est limité par une valeur entière où un multiples de 0,5.K (K = {4 ; 4,5}) pour que $f_{adc}$ ait une valeur égale à environ 25 MHz.

La figure 2 représente les valeurs d'IF1 en fonction des valeurs de $f_{RF}$, pour différentes valeurs de K et N. En choisissant une fenêtre dans laquelle la valeur d'IF1 varie entre 2,02 GHz et 2,036 GHz (et avec $f_{RFmax}$ = 2,48 GHz, $K_1$ = 4, $N_1$ = 18, $K_2$ = 4,5, $N_2$ = 21, C = 5/16, soit $\Delta$IF1 = 12,245 MHz), on remarque que la bande de $f_{RF}$ variant entre 2,4 GHz et 2,48 GHz est entièrement couverte par les droites 150.1 à 156.2 correspondant à des valeurs de K = 4 ou 4,5, et pour N variant de 18 à 24. Les droites 150.1, 152.1, 154.1 et 156.1 correspondent aux cas où K = 4,5, et les droites 150.2, 152.2, 154.2 et 156.2 correspondent aux cas où K = 4. De plus, les droites 150.1, 152.1, 154.1 et 156.1 correspondent respectivement aux cas où N = 24, 23, 22 et 21, et les droites 150.2, 152.2, 154.2 et 156.2 correspondent respectivement aux cas où N = 21, 20, 19 et 18. On voit sur la figure 2 que les valeurs de $K_1$, $K_2$, $N_1$ et $N_2$ peuvent être déterminées en déterminant quelles sont les deux droites adjacentes, parmi les droites 150.1 à 156.2, les plus éloignées l'une de l'autre. Sur l'exemple de la figure 2, il s'agit des droites 156.1 et 156.2 qui correspondent aux couples ($K_1$ ,$N_1$) = (4, 18) et ($K_2$, $N_2$) = (4,5, 21).

On voit également sur cette figure 2 que pour couvrir toute la bande $f_{RF}$, un changement de mode correspondant à un changement de la valeur de K ou N permet à IF1 de ne pas avoir à varier autant que $f_{RF}$. Dans cet exemple, IF1 varie de 16 MHz sur toute la bande de $f_{RF}$. Ainsi, le second filtre passe-bande 116 peut donc avoir une bande passante égale ou supérieure à environ 20 MHz centrée sur la valeur IF1 = 2,028 GHz. On voit donc que la valeur de la bande passante $BW_{IF1}$ de ce second filtre passe-bande 116 dépend de la valeur de la fréquence IF1, et donc du pas d'avance $\Delta$K du paramètre K ($\Delta$K = 0,5 dans l'exemple ci-dessus), ainsi que de la bande passante du canal $BW_{ch}$ :

$$BW_{IF1} = \Delta IF1 + BW_{ch} \qquad (16)$$

avec $\Delta$IF1 = $IF1_{max}$ - $IF1_{min}$

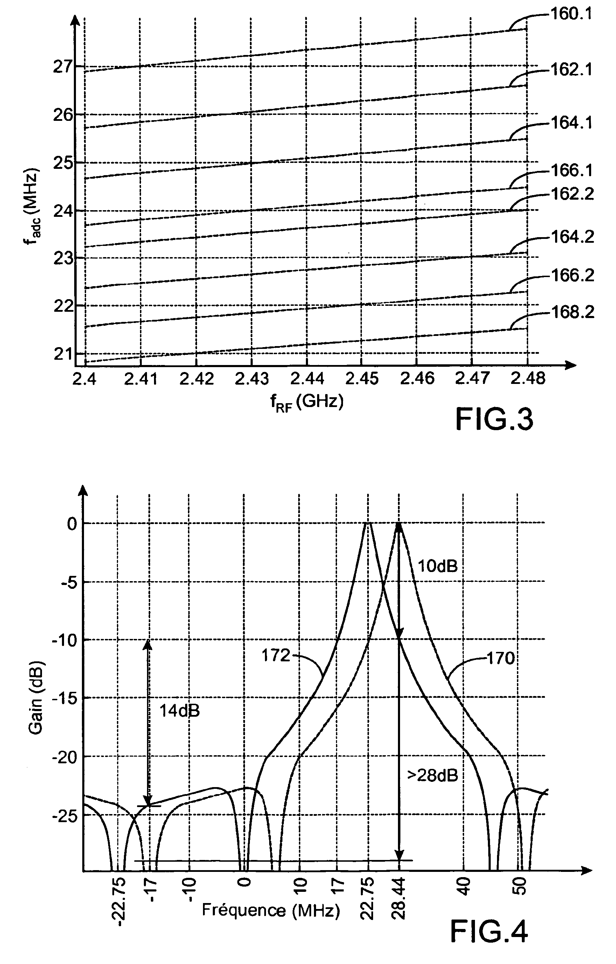

La figure 3 représente les valeurs de $f_{adc}$ en fonction des valeurs de $f_{RF}$, pour K = 4 et N variant de 18 à 21 (droites référencées 160.1, 162.1, 164.1 et 166.1) ou K = 4,5 et N variant de 21 à 24 (droites référencées 162.2, 164.2, 166.2 et 168.2).

Le tableau ci-dessous indique les valeurs des fréquences et des paramètres des différents éléments du dispositif de réception RF 100, c'est-à-dire les fréquences de la synthèse de fréquences réalisée, ainsi que les valeurs des différentes fréquences intermédiaires pour le canal $f_{RF}$ = 2,44 GHz, dans ce premier exemple de réalisation.

| $f_{OL}$ | fs | $f_{adc}$ | IF1 | IF2 | IF3 | K | M | N |
|---|---|---|---|---|---|---|---|---|
| 409,51 MHz | 91 MHz | 22,751 MHz | 2,0305 GHz | 28,438 MHz | 5,688 MHz | 4,5 | 4 | 4 |

La courbe 170 représentée sur la figure 4 représente la fonction de filtrage réalisée par la combinaison des filtres à temps discret I + jQ (126a + j126b) de type RII de ce premier exemple. On voit sur cette figure 4 que ce filtre est bien centré sur IF2 = 28,438 MHz, où se trouve le signal d'intérêt. La fréquence image relative à la décimation (IF2-2.IF3) est égale à 17 MHz. On voit que la réjection réalisée à -17 MHz par ce filtre est supérieure à -28 dB. A titre de comparaison, la courbe 172 représente une fonction de filtrage passe-bande de forme similaire à celle de la courbe 170, mais qui serait centrée à la fréquence $f_{adc}$ = fs/4 = 22,75 MHz. On voit que dans ce cas, la réjection réalisée à -17 MHz ne serait que de -14 dB. De plus, on voit également qu'à IF2, le filtrage réalisé en étant centré sur IF2 est supérieur d'environ 10 dB par rapport au filtrage centré sur fs/4.

On décrit ci-dessous un second exemple de réalisation du dispositif de réception RF 100, dans le cas cette fois d'une basse fréquence intermédiaire IF1, par exemple de valeur égale à environ 500 MHz. Là encore, on considère que le dispositif de réception 100 est conforme aux spécifications des normes Bluetooth Low Energy et IEEE 802.15.4. De manière générale, lorsque l'on choisira une basse fréquence intermédiaire IF1, la valeur d'IF1 pourra être supérieure ou égale à environ 160 MHz.

Pour maintenir le caractère basse consommation du dispositif de réception RF 100, les mêmes fréquences présentées au départ pour le convertisseur analogique-numérique du premier exemple ci-dessus vont être utilisées ($f_{adc}$ = 25 MHz). Afin d'avoir la même fonction de filtrage que celle représentée sur la figure 4, certains paramètres sont également maintenus aux mêmes valeurs : M = 4, n = 4 et $\alpha$ = 1.

Par rapport au premier exemple de réalisation précédemment décrit, la valeur de fs se rapproche de celle de IF1, et N est considéré comme constant (N = 5). Le paramètre K sera donc utilisé en tant que variable. Et étant donné que la fréquence $f_{OL}$ sera plus importante que dans le premier exemple de réalisation, les valeurs de K seront plus importantes.

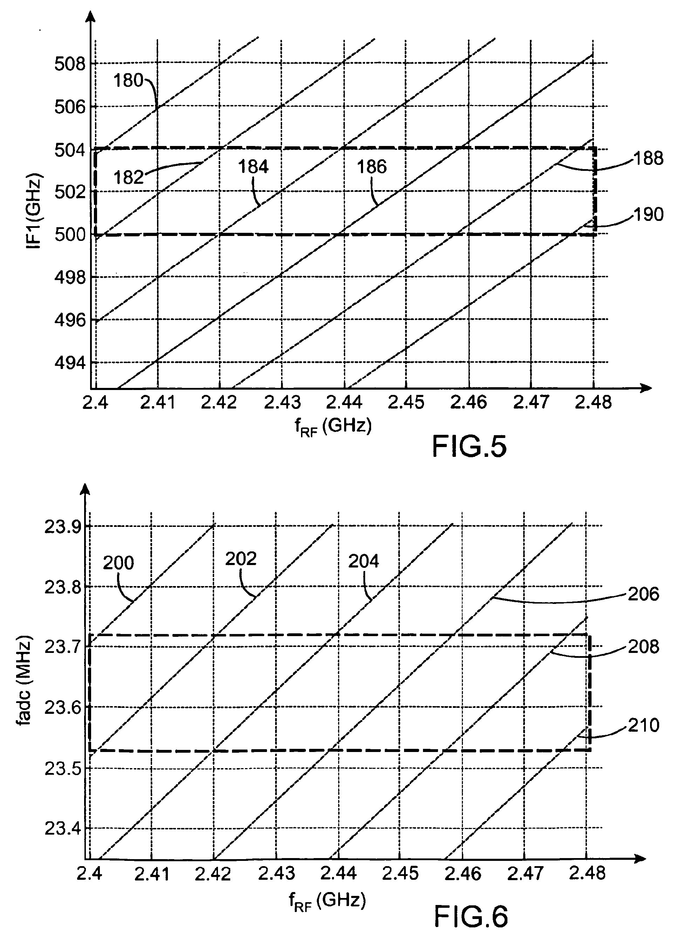

De manière analogue à la figure 2, les courbes 180 à 190 de la figure 5 représentent les valeurs d'IF1 en fonction des valeurs de $f_{RF}$ pour différentes valeurs de K. En choisissant une fenêtre dans laquelle la valeur d'IF1 varie entre 500 MHz et 504 MHz, on remarque que la bande de $f_{RF}$ variant entre 2,4 GHz et 2,48 GHz est entièrement couverte par les droites 180 à 190 correspondant à des valeurs de K variant de 20 (droite 180) à 21 (droite 190) avec un pas ΔK = 0,2. Dans ce second exemple, IF1 varie de 4 MHz sur toute la bande de $f_{RF}$. Ainsi, le second filtre passe-bande 116 peut donc avoir une bande passante égale ou supérieure à environ 6 MHZ de fréquence centrale égale à 502 MHz. Il convient de noter que des valeurs de K au-dessous de 20 ou au-dessus de 21 permettraient au dispositif de réception 100 de réaliser des fonctions de filtrage dans d'autres bandes de fréquences de réception.

La figure 6 représente les valeurs de $f_{adc}$ en fonction des valeurs de $f_{RF}$, pour des valeurs de K variant de 20 (droite 200) à 21 (droite 210) avec un pas de 0,2. On voit sur cette figure 6 que pour couvrir la bande $f_{RF}$ choisie, $f_{adc}$ varie de moins de 500 Khz et est centrée sur la valeur 23,63 MHz.

Le tableau ci-dessous indique les valeurs des fréquences et des paramètres des différents éléments du dispositif de réception RF 100 selon le second exemple de réalisation, ainsi que les valeurs des différentes fréquences intermédiaires pour le canal $f_{RF}$ = 2, 44 GHz.

| $f_{OL}$ | fs | $f_{adc}$ | IF1 | IF2 | IF3 | K |
|---|---|---|---|---|---|---|
| 1,9398 GHz | 94,163 MHz | 23,541 MHz | 500,24 MHz | 29,426 MHz | 5,885 MHz | 20,6 |

Les paramètres M et N ont chacun une valeur égale à 4.

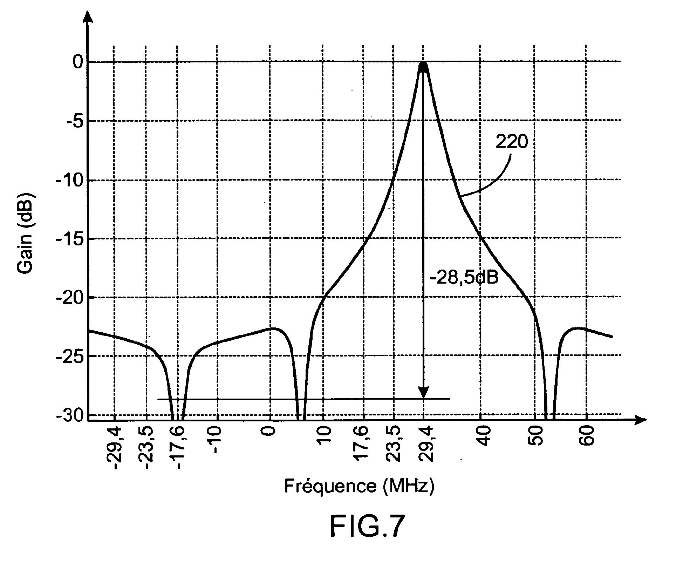

La courbe 220 représentée sur la figure 7 représente la fonction de filtrage réalisée par le second filtre passe-bande 116 RII de ce second exemple de réalisation. On voit sur cette figure 7 que le filtre 116 est bien centré sur IF2 = 29,426 MHz, où se trouve précisément le signal d'intérêt. La fréquence image relative à la décimation (IF2-2.IF3) est égale à 17,6 MHz. On voit que la réjection réalisée à -17,6 MHz par le second filtre passe-bande 116 est supérieure à - 28,5 dB.

Le caractère multistandards du dispositif de réception RF 100 s'illustre par le fait que le réseau de filtrage en temps discret du dispositif 100 ne change pas quelque soit le canal à démoduler et le standard des signaux RF reçus (entre le standard IEEE 802.15.4 et la norme Bluetooth Low Energy). En utilisant une fonction de filtrage à temps discret de type RII, on filtre de façon très importante les signaux voisins (interféreurs) au canal d'intérêt. Etant responsables de la saturation du convertisseur analogique-numérique, ces interféreurs limitent le gain maximal pouvant être appliqué dans la chaîne de réception. Or, il est possible d'appliquer plus de gain dans la chaîne (dans le même ordre que le filtrage de l'interféreur le plus puissant). Ainsi, le nombre effectif de bits du convertisseur analogique-numérique peut être relâché à chaque 6,2 dB de réjection de l'interféreur plus puissant.

La partie numérique de traitement des signaux se trouvant en aval des convertisseurs analogique-numérique 130a, 130b pourra notamment être apte à réaliser différentes démodulations et utiliser différents codes de correction d'erreurs et différentes fonctions de traitement afin de pouvoir traiter des signaux de différents standards de communication.

La fréquence de fonctionnement $f_{adc}$ des convertisseurs analogique-numérique 130a, 130b pourra être choisie de préférence faible afin de réduire le plus possible la consommation de ces convertisseurs.

La bande passante des filtres en temps discret 126a, 126b dépend notamment de la bande passante du signal modulé. Il est par exemple possible de réaliser les filtres en temps discret tels que leur bande passante, par exemple à -3 dB, à correspondent à la bande passante d'un canal que l'on souhaite démoduler. La réjection de la bande à $f_{adc}$/2 réalisée par les filtres 126a, 126b apporte de gros avantages au niveau du filtrage de canal, et par conséquent, permet de réduire la dynamique des convertisseurs analogique-numérique.

Selon la technologie disponible pour réaliser les moyens de filtrage à la première fréquence intermédiaire IF1, le circuit peut se trouver en configuration haute IF1 ou basse IF1. Dans le cas d'une haute IF1, les fréquences de référence ($f_{OL}$ et fs) peuvent être sensiblement réduites. Par contre, la bande passante des circuits d'échantillonnage est dans ce cas plus grande. Dans une configuration à basse IF1, les contraintes d'inversent, la fréquence $f_{OL}$ étant plus importante et la bande passante des circuits échantillonneurs plus faibles.

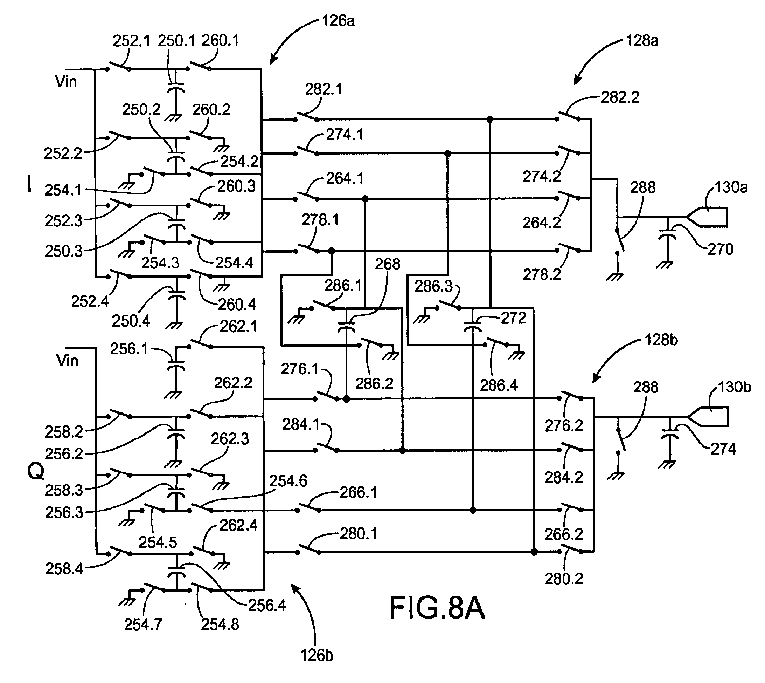

Un exemple de réalisation de la séparation des voies en phase et en quadrature et des filtres en temps discrets 126a, 126b et des décimateurs 128a, 128b du dispositif de réception RF 100 selon le premier exemple de réalisation précédemment décrit est représenté sur la figure 8A. Le filtre 126a de la voie en phase du dispositif 100 comporte quatre premières capacités 250.1 à 250.4 destinées à être chargées successivement à une fréquence égale à fs par la fermeture successive d'interrupteurs 252.1 à 252.4. La valeur unitaire des capacités (C1I = 1) dépend notamment d'une analyse en bruit et en bande passante du système, les valeurs des autres capacités étant égales à des ratios de la capacité unitaire. Les valeurs des capacités 250.1 à 250.4 (exprimées en ratio par rapport à la valeur unitaire C1I) sont les suivantes :

C1I (250.1) = 1
C2I (250.2) = 0,38
C3I (250.3) = 0,71
C4I (250.4) = 0,92

Les ratios entre les valeurs de ces capacités correspondent aux valeurs des coefficients I du numérateur du filtre. Les capacités dont les gains sont destinés à être négatifs (ici, les capacités 250.2 et 250.3) comportent des moyens d'inversion de polarité formés par des interrupteurs supplémentaires 254.1 - 254.4 reliés aux capacités 250.2 et 250.3.
Le filtre 126b de la voie en quadrature du dispositif 100 comporte quatre premières capacités 256.1 à 256.4, les trois capacités 256.2 à 256.4 étant destinées à être chargées successivement à une fréquence égale à fs par la fermeture successive d'interrupteurs 258.2 à 258.4. La première capacité 256.1 n'est pas reliée au signal d'entrée ($aQ_1$=0). Par contre, cette première capacité permet que l'impédance équivalente de la combinaison des capacités 252.1 à 252.4 soit la même que celle de la combinaison des capacités 256.1 à 256.4. Les valeurs des ratios des capacités 256.1 à 256.4 sont les suivantes :

C1Q (256.1) = 1
C2Q (256.2) = 0,92
C3Q (256.3) = 0,71
C4Q (256.4) = 0,38

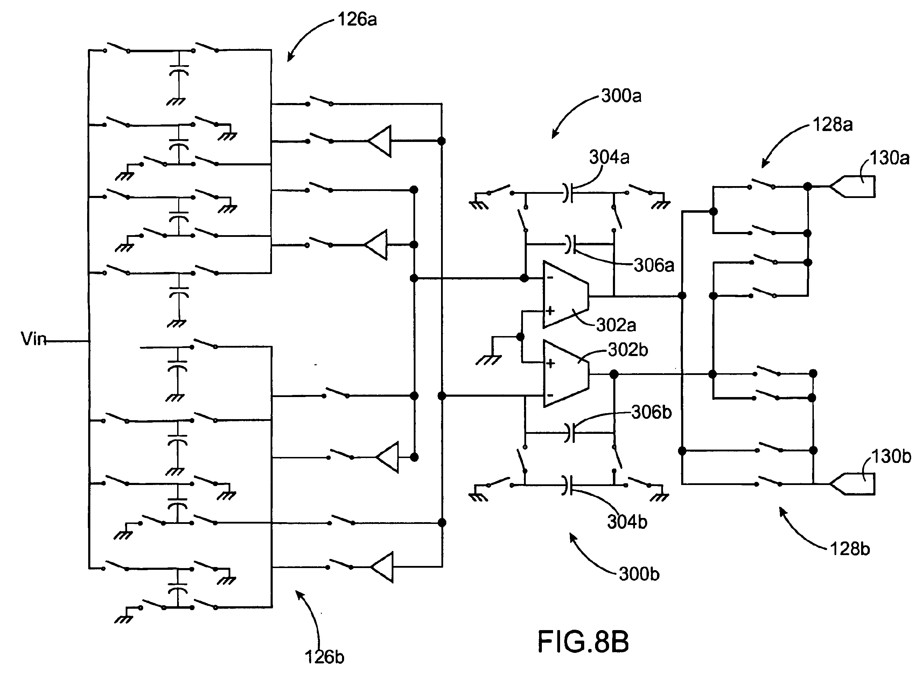

Les valeurs des capacités 256.2 à 256.4 correspondent aux valeurs des coefficients Q du numérateur du filtre. Les capacités dont les gains sont destinés à être négatifs (ici, les capacités 256.3 et 256.4) comportent également des moyens d'inversion de polarité formés par des interrupteurs supplémentaires 254.5 - 254.8 reliés aux capacités 256.3 et 256.4.
Les valeurs des coefficients des filtres 126a, 126b sont également définies par les capacités 250.1 - 250.4 et 256.1 - 256.4. Les filtres 126a, 126b comportent également des interrupteurs 260.1 à 260.4, 262.1 à 262.4, 264.1 - 264.2 et 266.1 - 266.2 permettant, en se fermant, de réaliser une redistribution de charges, les capacités 250.1 - 250.4 équilibrant alors leurs charges avec des capacités 268 et 270, et les capacités 256.1 - 256.4 équilibrant également leurs charges avec des capacités 272 et 274. Cette redistribution de charges réalise en même temps la somme pondérée des échantillons stockés dans les capacités 250.1 - 250.4 et 256.1 - 256.4 ainsi que la décimation. Toutefois, les capacités 270 et 274 sont déchargées avant que la somme pondérée soit réalisée. Par contre, les capacités 268 et 272, qui forment la contre réaction des filtres 126a et 126b qui sont ici de type RII, ne sont pas déchargées car ils sont destinés à contenir une partie de l'échantillon de la sortie, ce qui représente le dénominateur d'un filtre RII. Lorsque les filtres 126a, 126b ne sont pas de type RII, ces capacités 268 et 272 ne sont pas présentes. Ainsi, le rapport entre la valeur des capacités 250.1 - 250.4, 268 et 270, ainsi que le rapport entre la valeur des capacités 256.1 - 256.4, 272 et 274, représentent les valeurs des dénominateurs des coefficients I et Q des filtres 126a et 126b, ici égaux à -0,6 (et donc les valeurs des capacités 268 et 272 sont égales à 7,5 et les valeurs des capacités 270 et 274 sont égales à 1). Des interrupteurs 274.1 - 274.2 et 276.1 - 276.2 montés parallèlement aux interrupteurs 264.1 - 264.2 et 266.1 - 266.2 sont utilisés lors d'un cycle de charges suivant des capacités 250.1 - 250.4 et 256.1 - 256.4, permettant d'inverser les capacités 268 et 272 (appelées capacités en rotation) et d'équilibrer les charges dans les voies en phase et en quadrature. Cette opération permet de décaler les pôles à RII des filtres 126a, 126b. Pour réaliser l'opérateur -j.0,6 (opérateur du dénominateur des coefficients I et Q des filtres 126a, 126b), l'échantillon de sortie de la voie en phase est soustrait des échantillons d'entrée de la voie en quadrature et l'échantillon de sortie de la voie en quadrature est sommé aux échantillons d'entrée de la voie en phase. Les autres cycles de charges sont réalisés grâce à des interrupteurs 278.1 - 278.2, 280.1 - 280.2, 282.1 - 282.2 et 284.1 - 284.2 montés parallèlement aux interrupteurs 264.1 - 264.2 et 266.1 - 266.2. De plus, les changements de signes sont réalisés par l'intermédiaire des interrupteurs 286.1 - 286.4. Les valeurs des signaux en phase et en quadrature en sortie de la décimation sont gardées dans les capacités 270 et 274, pendant une période égale à 1/(2.fade), pour la conversion analogique-numérique. Avant une nouvelle redistribution des charges à $f_{adc}$, les capacités 270 et 274 sont déchargées par des interrupteurs 288. Ainsi, la contre réaction des filtres à RII dépend seulement des capacités 268 et 272, et non des capacités à l'entrée des convertisseurs analogique-numérique 270 et 274.
Un second exemple de réalisation de la séparation des voies en phase et en quadrature et des filtres en temps discrets 126a, 126b et des décimateurs 128a, 128b du dispositif de réception RF 100 selon le premier exemple de réalisation précédemment décrit est représenté sur la figure 8B.
Comme dans le premier exemple de réalisation décrit en liaison avec la figure 8A, les filtres 126a, 126b sont de type RII. Toutefois, les filtres 126a, 126b sont ici formés par des intégrateurs inverseurs 300a, 300b réalisés à partir d'amplificateurs à transconductance (OTA) 302a, 302b. Les valeurs des gains des boucles de contre-réaction de ces filtres sont fonction notamment des valeurs de capacités 304a, 304b et 306a, 306b montés en contre réaction des OTA 302a, 302b. Par exemple, pour le filtre 126a, son gain est égal à :

$$\frac{C1I + C2I + C3I + C4I}{C_{304a} + C_{306a}}$$

De même, pour le filtre 126b, son gain est égal à :

$$\frac{C1Q + C2Q + C3Q + C4Q}{C_{304b} + C_{306b}}$$

De plus, la sélectivité β de chacun des filtres 126a, 126b est également définie en fonction des valeurs des capacités 304a, 304b, 306a, 306b telle que :

$$\beta = \frac{C_{306}}{C_{304} + C_{306}}$$

Ainsi, en choisissant les valeurs des capacités 304 et 306, il est possible d'en modifier les valeurs du gain et/ou de la sélectivité, ces filtres 126a, 126b étant donc reconfigurables.

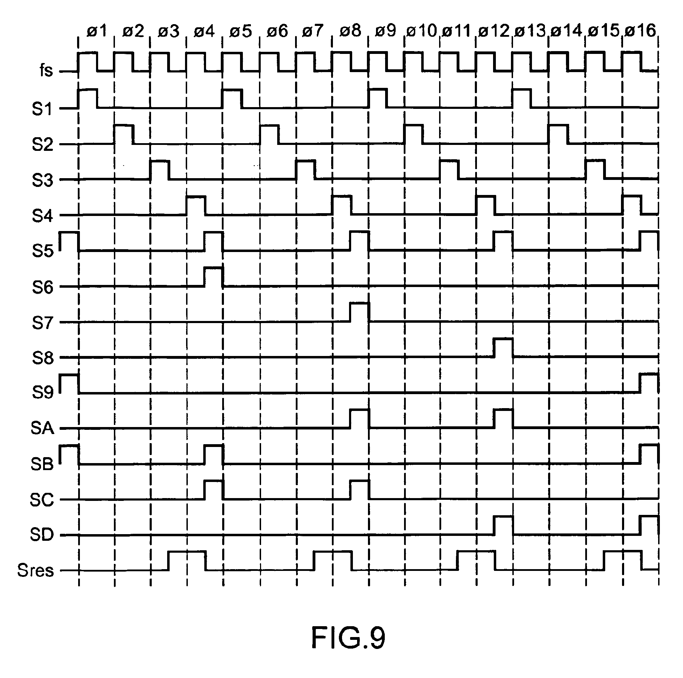

La figure 9 représente des chronogrammes illustrant le fonctionnement des filtres 126a, 126b et des décimateurs 128a, 128b précédemment décrits en liaison avec les figures 8A et 8B.

Le signal représenté sur la première ligne représente la fréquence d'échantillonnage fs. Les signaux des lignes suivantes représentent les signaux de commande envoyés aux différents interrupteurs représentés sur la figure 8A. Pour ces signaux de commande, un niveau bas correspond à un état ouvert de l'interrupteur et un niveau haut correspond à un état fermé de l'interrupteur. Le tableau ci-dessous indique la correspondance entre les différents signaux du chronogramme de la figure 9 et les interrupteurs représentés sur la figure 8A.

| Signal de commande | Interrupteurs commandés |
| --- | --- |
| S1 | 252.1 |
| S2 | 252.2 ; 254.1 ; 258.2 |
| S3 | 252.3 ; 254.3 ; 258.3 ; 254.5 |
| S4 | 252.4 ; 258.4 ; 254.7 |
| S5 | 254.2 ; 254.4 ; 254.6 ; 254.8 ; 260.1-260.4 ; 262.1-262.4 |
| S6 | 264.1-264.2 ; 266.1-266.2 |
| S7 | 274.1-274.2 ; 276.1-276.2 |
| S8 | 278.1-278.2 ; 280.1-280.2 |
| S9 | 282.1-282.2 ; 284.1-284.2 |
| SA | 286.1 |
| SB | 286.2 |
| SC | 286.3 |
| SD | 286.4 |
| Sres | 288 |

On voit notamment sur ce chronogramme que la redistribution de charges et la décimation sont réalisées par exemple pendant la période Φ4 au cours de laquelle le signal S4 revient à l'état bas et les signaux S5 et S6 passent à l'état haut (situation analogue pendant la période Φ8 avec les signaux S4, S5 et S7, pendant la période Φ12 avec les signaux S4, S5 et S8, et la période Φ16 avec les signaux S4, S5 et S9).

Dans une variante des modes de réalisation précédemment décrits, il est possible que la valeur d'IF1 du second filtre passe-bande 116 soit une valeur fixe choisie ne dépendant pas de N, fs, α, M et n. Toutefois, dans ce cas, le dispositif de réception 100 comportera deux circuits de synthèse de fréquences. Le dispositif de réception 100 comporte alors un second oscillateur local pilotant l'échantillonneur 120, le diviseur de fréquence 124 n'étant pas présent. Dans ce cas, la bande passante du filtre à IF1 pourra être réduite à la largeur d'un canal du standard du signal reçu.

## Revendications

1. Dispositif (100) de réception de signaux RF comportant au moins :

    - des moyens (112, 114) de transposition de signaux de fréquence $f_{RF}$ à une première fréquence intermédiaire IF1 < $f_{RF}$,
    - des premiers moyens (116) de filtrage passe-bande centré sur IF1 de signaux transposés à IF1,
    - des moyens d'échantillonnage (120) à une fréquence fs < IF1 de signaux délivrés par les premiers moyens (116) de filtrage, assurant une transposition desdits signaux délivrés par les premiers moyens (116) de filtrage à une seconde fréquence intermédiaire IF2 = α.fs/M + fs/(M.n),
    - des seconds moyens (126a, 126b) de filtrage en temps discret centré sur la seconde fréquence intermédiaire IF2 d'échantillons délivrés par les moyens d'échantillonnage (120),
    - des moyens (128a, 128b) de décimation d'un facteur M d'échantillons délivrés par les seconds moyens (126a, 126b) de filtrage, assurant une transposition des échantillons délivrés par les seconds moyens (126a, 126b) de filtrage à une troisième fréquence intermédiaire IF3 = fs/(M.n),
    - des moyens (130a, 130b) de conversion analogique-numérique fonctionnant à une fréquence fs/M d'échantillons délivrés par les moyens (128a, 128b) de décimation,

    α, n et M étant des nombres réels strictement positifs choisis tels que :

$$\alpha < fs/(2.BW_{ch}.M),$$

    et

$$BW_{ch}/2 < fs/(M.n),$$

    avec $BW_{ch}$ : bande passante d'un canal des signaux RF reçus.

2. Dispositif (100) selon la revendication 1, dans lequel les seconds moyens de filtrage comportent au moins un filtre (126a, 126b) à réponse impulsionnelle infinie.

3. Dispositif (100) selon l'une des revendications précédentes, dans lequel les moyens de transposition des signaux de fréquence $f_{RF}$ à la première fréquence intermédiaire IF1 comportent un mélangeur (112) apte à réaliser une convolution fréquentielle entre les signaux de fréquence $f_{RF}$ comprise entre une valeur maximale $f_{RFmax}$ et une valeur minimale $f_{RFmin}$, et un signal destiné à être délivré par un oscillateur local (114) et de fréquence $f_{OL}$ comprise entre $f_{RF}min$ - IF1 et $f_{RF}max$ - IF1, telle que :

$$IF1 = N.fs + \alpha.fs/M + fs/(M.n),$$

    et

$$IF1 = f_{RF} - f_{OL}, \text{ avec } f_{OL} = K.fs,$$

K étant un rapport choisi entre $f_{OL}$ et fs, et N étant l'ordre de l'harmonique transposant le signal de la fréquence IF1 à la fréquence IF2.

4. Dispositif (100) selon la revendication 3, dans lequel la fréquence fs et les paramètres $\alpha$, n, M, N et K sont choisis tels que :

$$BW_{IF1} \geq \Delta IF1 + BW_{ch}/2$$

avec $BW_{IF1}$ : bande passante des premiers moyens (116) de filtrage, et
$\Delta IF1$ : variation de IF1 lorsque $f_{RF}$ varie entre $f_{RFmax}$ et $f_{RFmin}$.

5. Dispositif (100) selon l'une des revendications 1 ou 2, dans lequel la fréquence fs et les paramètres $\alpha$, n et M sont choisis tels que :

$$BW_{IF1} \geq 2BW_{ch}$$

avec $BW_{IF1}$ : bande passante des premiers moyens (116) de filtrage.

6. Dispositif (100) selon l'une des revendications précédentes, comportant en outre au moins une antenne (104) de réception reliée à une entrée de moyens (106) de filtrage passe-bande centré sur la fréquence $f_{RF}$ dont une sortie est reliée à une entrée d'un amplificateur faible bruit (108), la sortie de l'amplificateur faible bruit (108) étant reliée à une entrée des moyens (112, 114) de transposition des signaux de fréquence $f_{RF}$ à la première fréquence intermédiaire IF1.

7. Dispositif (100) selon la revendication 6, dans lequel la bande passante des moyens (106) de filtrage passe-bande centré sur la fréquence $f_{RF}$ est égale ou supérieure à la largeur de bande totale des canaux des signaux RF destinés à être reçus par l'antenne (104) et/ou les moyens (106) de filtrage passe-bande centré sur la fréquence $f_{RF}$ comportent au moins un filtre de type BAW/FBAR.

8. Dispositif (100) selon l'une des revendications précédentes, dans lequel les premiers moyens de filtrage passe-bande centré sur IF1 comportent au moins un filtre (116) de type BAW, et/ou lorsque les moyens de transposition des signaux de fréquence $f_{RF}$ à la première fréquence intermédiaire IF1 comportent un oscillateur local (114), ledit oscillateur local (114) comporte un résonateur de type BAW.

9. Dispositif (100) selon l'une des revendications précédentes, comportant en outre des moyens (126a, 126b) de répartition sélective des composantes en phase et en quadrature des échantillons délivrés par les moyens (120) d'échantillonnage sur des voies distinctes, et dans lequel les moyens (128a, 128b) de décimation et les moyens (130a, 130b) de conversion analogique-numérique sont présents sur chacune des voies.

10. Dispositif (100) selon l'une des revendications précédentes, comportant en outre des moyens (134a, 134b, 134c, 134d, 136a, 136b) de conversion en bande de base numérique et de combinaison des voies en phase et en quadrature des échantillons numériques délivrés par les moyens de conversion analogique-numérique.

11. Procédé de réception de signaux RF comportant au moins les étapes de :

   a) transposition de signaux de fréquence $f_{RF}$ à une première fréquence intermédiaire IF1 < $f_{RF}$,
   b) filtrage passe-bande centré sur IF1 de signaux transposés à l'étape a),
   c) échantillonnage à une fréquence fs < IF1 de signaux filtrés à l'étape b), assurant une transposition desdits signaux filtrés à l'étape b) à une seconde fréquence intermédiaire IF2 = $\alpha.fs/M + fs/(M.n)$,
   d) filtrage en temps discret centré sur la seconde fréquence intermédiaire IF2 d'échantillons obtenus à l'étape c),
   e) décimation d'un facteur M d'échantillons filtrés à l'étape d), assurant une transposition des échantillons filtrés à l'étape d) à une troisième fréquence intermédiaire IF3 = $fs/(M.n)$,
   f) conversion analogique-numérique à une fréquence fs/M d'échantillons décimés à l'étape e),

$\alpha$, n et M étant des nombres réels strictement positifs choisis tels que :

EP 2 514 099 B1

$$\alpha < fs/(2.BW_{ch}.M),$$

et

$$BW_{ch}/2 < fs/(M.n),$$

avec $BW_{ch}$ : bande passante d'un canal des signaux RF reçus.

12. Procédé selon la revendication 11, dans lequel le filtrage à temps discret est réalisé par une fonction à réponse impulsionnelle infinie.

13. Procédé selon l'une des revendications 11 ou 12, dans lequel l'étape a) de transposition des signaux de fréquence $f_{RF}$ à la première fréquence intermédiaire IF1 comporte la réalisation d'une convolution fréquentielle entre les signaux de fréquence $f_{RF}$ comprise entre une valeur maximale $f_{RFmax}$ et une valeur minimale $f_{RFmin}$, et un signal de fréquence $f_{OL}$ comprise entre $f_{RF}min$ - IF1 et $f_{RF}max$ - IF1, telle que :

$$IF1 = N.fs + \alpha.fs/M + fs/(M.n),$$

et

$$IF1 = F_{RF} - f_{OL}, \text{ et } f_{OL} = K.fs,$$

K étant un rapport choisi entre $f_{OL}$ et fs, et N étant l'ordre de l'harmonique transposant le signal de la fréquence IF1 à la fréquence IF2.

14. Procédé selon l'une des revendications 11 à 13, comportant en outre, avant la mise en oeuvre de l'étape a) de transposition, une étape de filtrage passe-bande centré sur la fréquence $f_{RF}$ des signaux RF reçus puis une étape d'amplification faible bruit des signaux filtrés.

15. Procédé selon la revendication 14, dans lequel la bande passante du filtrage passe-bande centré sur la fréquence $f_{RF}$ est égale ou supérieure à la largeur de bande totale des canaux des signaux RF reçus.

16. Procédé selon l'une des revendications 11 à 15, comportant en outre, entre les étapes c) et d), la mise en oeuvre d'une étape de répartition sélective des composantes en phase et en quadrature des échantillons obtenus à l'étape c) sur des voies distinctes, les étapes d) à f) étant appliquées aux composantes réparties sur chacune des voies.

**Patentansprüche**

1. Einrichtung (100) zum Empfang von Funksignalen, umfassend wenigstens:

    - Umsetzmittel (112, 114), um Signale mit einer Frequenz $f_{RF}$ auf eine erste Zwischenfrequenz IF1 < $f_{RF}$ umzusetzen,
    - erste Filtermittel (116) zum auf IF1 zentrierten Bandpass-Filtern der auf IF1 umgesetzten Signale,
    - Abtastmittel (120), um die durch die ersten Filtermittel (116) gelieferten Signale mit einer Frequenz fs < IF1 abzutasten, wodurch eine Umsetzung der durch die ersten Filtermittel (116) gelieferten Signale auf eine zweite Zwischenfrequenz IF2 = $\alpha \cdot fs/M + fs/(M \cdot n)$ sichergestellt wird,
    - zweite Filtermittel (126a, 126b) zum zeitdiskreten Filtern der durch die Abtastmittel (120) gelieferten Abtastwerte, zentriert auf die zweite Zwischenfrequenz IF2,
    - Dezimationsmittel (128a, 128b), um die durch die zweiten Filtermittel (126a, 126b) gelieferten Abtastwerte mit einem Faktor M zu dezimieren, wodurch eine Umsetzung der durch die zweiten Filtermittel (126a, 126b) gelieferten Abtastwerte auf eine dritte Zwischenfrequenz IF3 = fs/(M·n) sichergestellt wird,
    - bei einer Frequenz von fs/M arbeitende AD-Wandler-Mittel (130a, 130b) für die durch die Dezimationsmittel

17

(128a, 128b) gelieferten Abtastwerte,

wobei $\alpha$, n und M streng positive reelle Zahlen sind, die so ausgewählt sind, dass:

$$\alpha < fs/(2 \cdot BW_{ch} \cdot M),$$

und

$$BW_{ch}/2 < fs/(M \cdot n)$$

wobei $BW_{ch}$: Bandbreite des Durchlassbereichs von einem Kanal der empfangenen Funksignale.

2. Einrichtung (100) nach Anspruch 1, wobei die zweiten Filtermittel wenigstens ein Filter (126a, 126b) mit unendlicher Impulsantwort umfassen.

3. Einrichtung (100) nach einem der vorhergehenden Ansprüche, wobei die Umsetzmittel zur Umsetzung der Signale mit Frequenz $f_{RF}$ auf die erste Zwischenfrequenz IF1 einen Mischer (112) umfassen, der dazu geeignet ist, eine Frequenz-Faltung zwischen den Signalen mit Frequenz $f_{RF}$ zwischen einem Maximalwert $f_{RFmax}$ und einem Minimalwert $f_{RFmin}$ und einem Signal mit Frequenz $f_{OL}$ zwischen $f_{RFmin}$ - IF1 und $f_{RFmax}$ - IF1 durchzuführen, das dazu bestimmt ist, von einem lokalen Oszillator (114) geliefert zu werden, so dass:

$$IF1 = N \cdot fs + \alpha \cdot fs/M + fs/(M \cdot n)$$

und

$$IF1 = f_{RF} - f_{OL}, \text{ mit } f_{OL} = K \cdot fs,$$

wobei K ein ausgewähltes Verhältnis zwischen $f_{OL}$ und fs ist, und N die Ordnung der Harmonischen ist, welche das Signal der Frequenz IF1 auf die Frequenz IF2 umsetzt.

4. Einrichtung (100) nach Anspruch 3, wobei die Frequenz fs und die Parameter $\alpha$, n, M, N und K so ausgewählt sind, dass:

$$BW_{IF1} \geq \Delta IF1 + BW_{ch}/2$$

wobei
$BW_{IF1}$: Bandbreite des Durchlassbereichs der ersten Filtermittel (116), und
$\Delta IF1$: Variation von IF1, wenn $f_{RF}$ zwischen $f_{RFmax}$ und $f_{RFmin}$ variiert.

5. Einrichtung (100) nach einem der Ansprüche 1 oder 2, wobei die Frequenz fs und die Parameter $\alpha$, n und M so ausgewählt sind, dass:

$$BW_{IF1} \geq 2BW_{ch},$$

wobei
$BW_{IF1}$: Bandbreite des Durchlassbereichs der ersten Filtermittel (116).

6. Einrichtung (100) nach einem der vorhergehenden Ansprüche, weiterhin umfassend wenigstens eine Empfangsantenne (104), die mit einem Eingang der Filtermittel (106) zum auf die Frequenz $f_{RF}$ zentrierten Bandpass-Filtern verbunden sind, wobei ein Ausgang davon mit einem Eingang eines Verstärkers mit niedrigem Rauschen (108) verbunden ist, wobei der Ausgang von dem Verstärker mit niedrigem Rauschen (108) mit einem Eingang der Umsetzmittel (112, 114) zum Umsetzen der Signale mit Frequenz $f_{RF}$ auf die erste Zwischenfrequenz IF1 verbunden ist.

7. Einrichtung (100) nach Anspruch 6, wobei die Bandbreite des Durchlassbereichs der Filtermittel (106) zum auf die Frequenz $f_{RF}$ zentrierten Bandpassfiltern größer oder gleich der Gesamt-Bandbreite der Kanäle der Funksignale ist, die dazu bestimmt sind, von der Antenne (104) empfangen zu werden, oder/und die Filtermittel (106) zum auf die Frequenz $f_{RF}$ zentrierten Bandpassfiltern wenigstens ein Filter vom BAW/FBAR-Typ umfassen.

8. Einrichtung (100) nach einem der vorhergehenden Ansprüche, wobei die ersten Filtermittel zum auf IF1 zentrierten Bandpassfiltern wenigstens ein Filter (116) vom BAW-Typ umfassen, oder/und dann, wenn die Umsetzmittel zum Umsetzen der Signale mit Frequenz $f_{RF}$ auf die erste Zwischenfrequenz IF1 einen lokalen Oszillator (114) umfassen, der lokale Oszillator (114) einen Resonator vom BAW-Typ umfasst.

9. Einrichtung (100) nach einem der vorhergehenden Ansprüche, weiterhin umfassend Mittel (126a, 126b) zur selektiven Verteilung der Inphase-Komponenten und Quadratur-Komponenten der Abtastwerte, die durch die Abtastmittel (120) geliefert werden, auf separate Wege, und wobei die Dezimationsmittel (128a, 128b) und die AD-Wandler-Mittel (130a, 130b) auf jedem der Wege vorliegen.

10. Einrichtung (100) nach einem der vorhergehenden Ansprüche, weiterhin umfassend Mittel (134a, 134b, 134c, 134d, 136a, 136b) zur Umwandlung in ein digitales Basisband und zur Kombination der Inphase-und Quadratur-Wege der digitalen Abtastwerte, welche durch die AD-Wandler-Mittel geliefert werden.

11. Verfahren zum Empfangen von Funksignalen, umfassend wenigstens die Schritte:

a) Umsetzung von Signalen mit Frequenz $f_{RF}$ auf eine erste Zwischenfrequenz IF1 < $f_{RF}$,
b) auf IF1 zentrierte Bandpassfilterung der im Schritt a) umgesetzten Signale,
c) Abtasten der im Schritt b) gefilterten Signale mit einer Frequenz fs < IF1, wodurch eine Umsetzung der im Schritt b) gefilterten Signale auf eine zweite Zwischenfrequenz IF2 = α·fs/M + fs/(M·n) sichergestellt wird,
d) auf die zweite Zwischenfrequenz IF2 zentrierte, zeitdiskrete Filterung der im Schritt c) erhaltenen Abtastwerte,
e) Dezimierung der im Schritt d) gefilterten Abtastwerte mit einem Faktor M, wodurch eine Umsetzung der im Schritt d) gefilterten Abtastwerte auf eine dritte Zwischenfrequenz IF3 = fs/(M·n) sichergestellt wird,
f) Analog-Digital-Wandlung der im Schritt e) dezimierten Abtastwerte mit einer Frequenz fs/M,

wobei α, n und M streng positive reelle Zahlen sind, die so ausgewählt sind, dass:

$$\alpha < fs/(2 \cdot BW_{ch} \cdot M),$$

und

$$BW_{ch}/2 < fs/(M \cdot n)$$

wobei $BW_{ch}$: Bandbreite des Durchlassbereichs von einem Kanal der empfangenen Funksignale.

12. Verfahren nach Anspruch 11, wobei die zeitdiskrete Filterung durch eine Funktion mit unendlicher Impulsantwort durchgeführt wird.

13. Verfahren nach einem der Ansprüche 11 oder 12, wobei der Schritt a) der Umsetzung der Signale mit Frequenz $f_{RF}$ auf die erste Zwischenfrequenz IF1 die Durchführung von einer Frequenz-Faltung zwischen den Signalen mit Frequenz $f_{RF}$ zwischen einem Maximalwert $f_{RFmax}$ und einem Minimalwert $f_{RFmin}$ und einem Signal mit einer Frequenz $f_{OL}$ zwischen $f_{RFmin}$ - IF1 und $f_{RFmax}$ - IF1 umfasst, so dass:

$$IF1 = N \cdot fs + \alpha \cdot fs/M + fs/(M \cdot n)$$

und

$$IF1 = f_{RF} - f_{OL}, \text{ mit } f_{OL} = K \cdot fs,$$

wobei K ein ausgewähltes Verhältnis zwischen $f_{OL}$ und fs ist, und N die Ordnung der Harmonischen ist, welche das Signal der Frequenz IF1 auf die Frequenz IF2 umsetzt.

**14.** Verfahren nach einem der Ansprüche 11 bis 13, weiterhin umfassend, vor der Durchführung des Schritts a) der Umsetzung, einen Bandpass-Filter-Schritt, zentriert auf die Frequenz $f_{RF}$ der empfangenen Funksignale, dann einen Schritt der Verstärkung mit niedrigem Rauschen der gefilterten Signale.

**15.** Verfahren nach Anspruch 14, wobei die Bandbreite des Durchlassbereichs der auf die Frequenz $f_{RF}$ zentrierten Bandpassfilterung größer oder gleich der Gesamt-Bandbreite der Kanäle der empfangenen Funksignale ist.

**16.** Verfahren nach einem der Ansprüche 11 bis 15, weiterhin umfassend, zwischen den Schritten c) und d), die Durchführung von einem Schritt der selektiven Verteilung der Inphase- und Quadratur-Komponenten der im Schritt c) erhaltenen Abtastwerte auf separate Wege, wobei die Schritte d) bis f) auf die auf jeden der Wege verteilten Komponenten angewendet werden.

## Claims

**1.** RF signal reception device (100) including at least:

- means (112, 114) of transposition of signals of frequency $f_{RF}$ to a first intermediate frequency IF1 < $f_{RF}$,
- first bandpass filtering means (116) centred on IF1 of signals transposed to IF1,
- means of sampling (120) at a frequency fs < IF1 of signals delivered by the first filtering means (116), transposing said signals delivered by the first filtering means (116) to a second intermediate frequency IF2 = $\alpha$.fs/M + fs/(M.n),
- second discrete-time filtering means (126a, 126b) centred on the second intermediate frequency IF2 of samples delivered by the sampling means (120),
- means (128a, 128b) of decimation of a factor M of samples delivered by the second filtering means (126a, 126b), transposing the samples delivered by the second filtering means (126a, 126b) to a third intermediate frequency IF3 = fs/(M.n),
- means (130a, 130b) for analog-digital conversion, operating at a frequency fs/M, of samples delivered by the decimation means (128a, 128b),

where $\alpha$, n and M are strictly positive real numbers chosen such that:

$$\alpha < fs/(2.BW_{ch}.M),$$

and

$$BW_{ch}/2 < fs/(M.n),$$

with $BW_{ch}$: bandwidth of a channel of the received RF signals.

**2.** Device (100) according to claim 1, in which the second filtering means include at least one infinite impulse response filter (126a, 126b).

**3.** Device (100) according to one of the previous claims, in which the means of transposition of signals of frequency $f_{RF}$ to the first intermediate frequency IF1 include a mixer (112) able to accomplish a frequency convolution between signals of frequency $f_{RF}$, of between a maximum value $f_{RFmax}$ and a minimum value $f_{RFmin}$, and a signal intended to be delivered by a local oscillator (114) of frequency $f_{OL}$ of between $f_{RFmin}$ - IF1 and $f_{RFmax}$ - IF1, such that:

$$IF1 = N.fs + \alpha.fs/M + fs/(M.n),$$

and

$$IF1 = f_{RF} - f_{OL}, \text{ with } f_{OL} = K.fs,$$

where K is a ratio chosen between $f_{OL}$ and fs, and N is the order of the harmonic transposing the signal from frequency IF1 to frequency IF2.

4. Device (100) according to claim 3, in which frequency fs and parameters $\alpha$, n, M, N and K are chosen such that:

$$BW_{IF1} \geq \Delta IF1 + BW_{ch}/2$$

with $BW_{IF1}$: bandwidth of the first filtering means (116), and
$\Delta IFL$: variation of IF1 when $f_{RF}$ varies between $f_{RFmax}$ and $f_{RFmin}$.

5. Device (100) according to one of the claims 1 or 2, in which frequency fs and parameters $\alpha$, n and M are chosen such that:

$$BW_{IF1} \geq 2BW_{ch}$$

with $BW_{IF1}$: bandwidth of the first filtering means (116).

6. Device (100) according to one of the previous claims, also including at least one reception antenna (104) connected to an input of bandpass filtering means (106) centred on frequency $f_{RF}$, one output of which is connected to an input of a low-noise amplifier (108), where the output of the low-noise amplifier (108) is connected to an input of means (112, 114) of transposition of signals of frequency $f_{RF}$ to first intermediate frequency IF1.

7. Device (100) according to claim 6, in which the bandwidth of the bandpass filtering means (106) centred on frequency $f_{RF}$ is equal to or greater than the total bandwidth of the channels of the RF signals intended to be received by the antenna (104) and/or the bandpass filtering means (106) centred on frequency $f_{RF}$ include at least one filter of the BAW/FBAR type.

8. Device (100) according to one of the previous claims, in which the first bandpass filtering means centred on IF1 include at least one filter (116) of the BAW type, and/or when the means of transposition of the signals of frequency $f_{RF}$ to first intermediate frequency IF1 include a local oscillator (114), where said local oscillator (114) includes a resonator of the BAW type.

9. Device (100) according to one of the previous claims, also including means (126a, 126b) for selective distribution of the in-phase and quadrature components of the samples delivered by the sampling means (120) over separate paths, and in which the decimation means (128a, 128b) and the analog-digital conversion means (130a, 130b) are present in each of the paths.

10. Device (100) according to one of the previous claims, also including means (134a, 134b, 134c, 134d, 136a, 136b) for conversion into a digital baseband, and for combination of the in-phase and quadrature paths of the digital samples delivered by the analog-digital conversion means.

11. Method of reception of RF signals including at least the steps of:

a) transposition of signals of frequency $f_{RF}$ to a first intermediate frequency IF1 < $f_{RF}$,
b) bandpass filtering centred on IF1 of signals transposed in step a),
c) sampling at a frequency fs < IF1 of signals filtered in step b), transposing said signals filtered in step b) to a second intermediate frequency IF2 = $\alpha$.fs/M + fs/(M.n),
d) discrete-time filtering centred on second intermediate frequency IF2 of samples obtained in step c),
e) decimation of a factor M of samples filtered in step d), transposing the samples filtered in step d) to a third intermediate frequency IF3 = fs/(M.n),

f) analog-digital conversion at a frequency fs/M of samples decimated in step e),
where $\alpha$, n and M are strictly positive real numbers chosen such that:

$$\alpha < fs/(2.BW_{ch}.M),$$

and

$$BW_{ch}/2 < fs/(M.n),$$

with $BW_{ch}$: bandwidth of a channel of the received RF signals.

12. Method according to claim 11, in which the discrete-time filtering is accomplished by an infinite impulse response function.

13. Method according to one of the claims 11 or 12, in which step a) of transposition of the signals of frequency $f_{RF}$ to first intermediate frequency IF1 includes the accomplishment of a frequency convolution between the signals of frequency $f_{RF}$, between a maximum value $f_{RFmax}$ and a minimum value $f_{RFmin}$, and a signal of frequency $f_{OL}$ between $f_{RFmin}$ - IF1 and $f_{RFmax}$ - IF1, such that:

$$IF1 = N.fs + \alpha.fs/M + fs/(M.n),$$

and

$$IF1 = F_{RF} - f_{OL}, \text{ and } f_{OL} = K.fs,$$

Where K is a ratio chosen between $f_{OL}$ and fs, and N is the order of the harmonic transposing the signal from frequency IF1 to frequency IF2.

14. Method according to one of the claims 11 to 13, which also includes, before implementation of step a) of transposition, a bandpass filtering step centred on frequency $f_{RF}$ of the RF signals received, followed by a step of low-noise amplification of the filtered signals.

15. Method according to claim 14, in which the bandwidth of the bandpass filtering centred on frequency $f_{RF}$ is equal to or greater than the total bandwidth of the channels of the received RF signals.

16. Method according to one of the claims 11 to 15, which also includes, between steps c) and d), the implementation of a step of selective distribution of the in-phase and quadrature components of the samples obtained in step c) over separated paths, where steps d) to f) are then applied to the components distributed over each of the paths.

FIG.1

FIG.2

FIG.3

FIG.4

FIG.5

FIG.6

FIG.7

FIG.8A

EP 2 514 099 B1

EP 2 514 099 B1

FIG.8B

28

FIG.9

## RÉFÉRENCES CITÉES DANS LA DESCRIPTION

**Documents brevets cités dans la description**

- US 7023245 B2
- US 20070140382 A1
- US 20090017785 A1
- WO 2009091822 A1

**Littérature non-brevet citée dans la description**

- **G. XU ; J. YUAN.** Performance analysis of general charge sampling. *IEEE Transactions on Circuits and Systems II : Express Briefs,* Février 2005, vol. 52 (2), 107-111
- **D. JAKONIS et al.** A 2.4-GHz RF sampling receiver front-end in 0.18-$\mu$m CMOS. *IEEE Journal of Solid-State Circuits,* Juin 2005, vol. 40 (6), 1265-1277
- Design and performance of a wideband sub-sampling front-end for multi-standard radios. **M. YUCE ; A. TEKIN ; W. LIU.** AEU International Journal of Electronics and Communications. Elsevier, 06 Décembre 2007, vol. 62, 41-48